(19) Europäisches Patentamt
European Patent Office
Office européen des brevets

(11) EP 4 814 547 A1

(12) # EUROPEAN PATENT APPLICATION
published in accordance with Art. 153(4) EPC

(43) Date of publication:
**30.09.2026 Bulletin 2026/40**

(21) Application number: **24893972.0**

(22) Date of filing: **31.10.2024**

(51) International Patent Classification (IPC):
***G02B 1/04*** *(2006.01)* ***B32B 7/023*** *(2019.01)*
***B32B 27/40*** *(2006.01)* ***C08G 18/38*** *(2006.01)*

(52) Cooperative Patent Classification (CPC):
**B32B 7/023; B32B 27/40; C08G 18/38; G02B 1/04**

(86) International application number:
**PCT/JP2024/038927**

(87) International publication number:
**WO 2025/109980 (30.05.2025 Gazette 2025/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.11.2023 JP 2023196633**
**19.09.2024 JP 2024161960**

(71) Applicant: **Mitsui Chemicals, Inc.**
**Tokyo 104-0028 (JP)**

(72) Inventors:
- **KASORI, Yuuki**
**Omuta-shi, Fukuoka 836-8610 (JP)**
- **KADOWAKI, Shinichiro**
**Omuta-shi, Fukuoka 836-8610 (JP)**
- **TOGO, Norihiro**
**Omuta-shi, Fukuoka 836-8610 (JP)**

(74) Representative: **Mewburn Ellis LLP**
**Aurora Building**
**Counterslip**
**Bristol BS1 6BX (GB)**

(54) **OPTICAL MEMBER AND METHOD FOR MANUFACTURING OPTICAL MEMBER**

(57) An optical member (100) includes a sulfur atom-containing resin substrate (11); and a photochromic layer(21) laminated on a surface of the sulfur atom-containing resin substrate (11), in which in order to improve adhesion between layers, a maximum point stress measured by the FOLLOWING procedure x is 138 N/mm$^2$ or more and 177 N/mm$^2$ or less, Procedure x: using the optical member (100), a three-point bending test is performed at 25°C in accordance with JIS K7171, and a maximum point stress (N/mm$^2$) in a case where the test is performed under conditions of a span between fulcrums of 34 mm, a speed of 10 mm/min, and a radius R2 of a support of 2 mm is measured.

Fig.1
21a
11b
21
11
11a
100

EP 4 814 547 A1

## Description

### TECHNICAL FIELD

The present invention relates to an optical member and a method for producing an optical member.

### BACKGROUND ART

In the related art, it is known that a photochromic compound can be reversibly colored/bleached depending on the presence or absence of light such as sunlight. For example, by using a plastic lens having photochromic performance in eyeglasses, the eyeglasses can function as ordinary transparent eyeglasses indoors, and the lens can be colored gray, brown, or the like in response to sunlight (ultraviolet rays) outdoors, thereby obtaining a function of protecting the eyes from glare. In addition, since such eyeglasses do not need to be put on again depending on whether the eyeglasses are indoors or outdoors like sunglasses, convenience of use both indoors and outdoors can be obtained.
Examples of a method for producing a photochromic lens include a kneading method, a coating method, and a lamination method (cast polymerization method).
For example, Patent Document 1 (Pamphlet of International Publication No. WO 2012/141306) discloses a kneading method for producing a photochromic lens using a photochromic polymerizable composition in which a photochromic compound is dissolved in a monomer mixture containing a (meth)acrylic acid ester and divinylbenzene having a specific structure.
In addition, Patent Document 2 (Pamphlet of International Publication No. WO 2011/125956) discloses a coating method for producing a photochromic lens by coating a plastic lens substrate to which a photochromic compound is not added with a coating liquid containing a photochromic compound.
In addition, Patent Document 3 (Pamphlet of International Publication No. WO 2003/011967) discloses a cast polymerization method for forming a photochromic layer on a surface of a plastic lens by disposing a plastic lens and a glass mold in a mold with a gap therebetween, and pouring a photochromic composition into the gap and polymerizing and curing the photochromic composition.
In addition, a plastic lens is required to have high refractive index, high Abbe number, and performance such as high heat resistance, high impact resistance, and low specific gravity as physical properties. As a material that satisfies such performance, a polythiourethane resin or an episulfide resin in which a sulfur atom is introduced into a resin is known.

### RELATED DOCUMENT

### PATENT DOCUMENT

Patent Document 1: Pamphlet of International Publication No. WO 2012/141306
Patent Document 2: Pamphlet of International Publication No. WO 2011/125956
Patent Document 3: Pamphlet of International Publication No. WO 2003/011967

### SUMMARY OF THE INVENTION

### TECHNICAL PROBLEM

However, in a case where a photochromic compound is directly mixed with a material constituting a lens substrate as in a kneading method, the mechanical strength of the material constituting the lens substrate itself is important in order to obtain the strength of the lens itself. However, the lens substrate using a monomer mixture containing (meth)acrylic acid ester and divinylbenzene having a specific structure as disclosed in Patent Document 1 does not have sufficient mechanical strength.
In addition, in a coating method and a lamination method, the lens base layer and the photochromic layer are adhered to each other using a primer or an adhesive, but in a case where the primer or the adhesive is not used, peeling may occur between the lens base layer and the photochromic layer.
Therefore, in the techniques disclosed in Patent Documents 2 and 3, there is room for improvement in the adhesiveness between the layers.
In recent years, with an increase in demand for photochromic lenses, various types of processing may be performed on the lenses in order to enhance the designability and functionality of the lenses. Therefore, the lens is required to have higher adhesiveness in which interlayer peeling during processing or the like is suppressed while maintaining the

photochromic function.
Therefore, the present inventors have focused on a photochromic lens using a lens base layer in which a sulfur atom is newly introduced into a resin, and have conducted intensive studies from the viewpoint of improving the adhesiveness between a sulfur atom-containing resin substrate and a photochromic layer, and have found that the adhesiveness between the lens base layer and the photochromic layer required for an optical member can be enhanced by manufacturing the optical member to satisfy a predetermined maximum point stress, thereby completing the present invention.

SOLUTION TO PROBLEM

According to the present invention, the following optical member and method for producing an optical member are provided.

1. An optical member includes:

a sulfur atom-containing resin substrate; and a photochromic layer laminated on a surface of the sulfur atom-containing resin substrate,
in which a maximum point stress measured by the following procedure x is 138 $N/mm^2$ or more and 177 $N/mm^2$ or less,
procedure x: using the optical member, a three-point bending test is performed at 25°C in accordance with JIS K7171, and a maximum point stress ($N/mm^2$) in a case where the test is performed under conditions of a span between fulcrums of 34 mm, a speed of 10 mm/min, and a radius R2 of a support of 2 mm is measured.

2. The optical member according to 1.,
in which the photochromic layer is a cured product of a first polymerizable composition containing a bifunctional or higher functional iso(thio)cyanate compound (a), a hydroxyl group-containing polyether compound (b), a bifunctional or higher functional active hydrogen compound (c), and a photochromic compound (d).
3. The optical member according to 1. or 2.,
in which the sulfur atom-containing resin substrate is a poly(thio)urethane resin substrate or an episulfide-based resin substrate.
4. The optical member according to 3.,

in which in a case where a surface of the episulfide-based resin substrate is subjected to Fourier transform infrared spectrophotometer (FTIR) analysis by an attenuated total reflectance method (ATR method), and an absorbance of a maximum absorption peak observed at 2900 to 2970 $cm^{-1}$ is defined as T1 and an absorbance of a maximum absorption peak observed at 2550 to 2700 $cm^{-1}$ is defined as T0, a ratio (%) of T0 to T1 is in a range of 4% to 10%, and
the photochromic layer is a cured product of a first polymerizable composition containing a bifunctional or higher functional iso(thio)cyanate compound (a), a hydroxyl group-containing polyether compound (b), a bifunctional or higher functional active hydrogen compound (c), and a photochromic compound (d).

5. The optical member according to 3. or 4.,
in which the episulfide-based resin substrate is a cured product of a second polymerizable composition containing a bifunctional or higher functional thiol compound (e) and a bifunctional or higher functional episulfide compound (f).
6. The optical member according to any one of 3. to 5.,
in which an equivalent ratio of a thiol group to an episulfide group in the episulfide-based resin substrate is 1:99 to 30:70.
7. The optical member according to 3.,
in which the episulfide compound (f) contained in the episulfide-based resin substrate is any one of bis(2,3-epithiopropyl)sulfide or bis(2,3-epithiopropyl)disulfide.
8. The optical member according to 3. or 7.,

in which in a case where a surface of the poly(thio)urethane resin substrate is subjected to Fourier transform infrared spectrophotometer (FTIR) analysis by an attenuated total reflectance method (ATR method), and an absorbance of a maximum absorption peak observed at 2900 to 2970 $cm^{-1}$ is defined as A1 and an absorbance of a maximum absorption peak observed at 2250 to 2260 $cm^{-1}$ is defined as A0, a ratio (%) of A0 to A1 is in a range of 30% to 99%, and
the photochromic layer is a cured product of a first polymerizable composition containing a bifunctional or higher functional iso(thio)cyanate compound (a), a hydroxyl group-containing polyether compound (b), a bifunctional or

higher functional active hydrogen compound (c), and a photochromic compound (d).

9. The optical member according to any one of 3., 7., or 8., in which the poly(thio)urethane resin substrate is a cured product of a second polymerizable composition containing a bifunctional or higher functional iso(thio)cyanate compound (a) and a bifunctional or higher functional thiol compound (e).
10. The optical member according to any one of 3., 7. to 9., in which an equivalent ratio (SH:NCO) of a thiol group to an isocyanate group in the poly(thio)urethane resin substrate is 40:60 to 60:40.
11. The optical member according to any one of 1. to 10., in which a ratio (thickness of sulfur atom-containing resin substrate/thickness of photochromic layer) of a thickness (mm) of the sulfur atom-containing resin substrate to a thickness (mm) of the photochromic layer is 0.5 to 20.
12. The optical member according to any one of 1. to 11., in which a thickness (mm) of the sulfur atom-containing resin substrate is 0.5 to 20 mm.
13. The optical member according to any one of 1. to 12., in which a thickness (mm) of the photochromic layer is 0.1 to 5 mm.
14. The optical member according to any one of 1. to 13., in which the bifunctional or higher functional iso(thio)cyanate compound (a) contained in the photochromic layer includes one or two or more selected from xylylene diisocyanate, 2,5-bis(isocyanatomethyl)bicyclo-[2.2.1]-heptane, 2,6-bis(isocyanatomethyl)bicyclo-[2.2.1]-heptane, tolylene diisocyanate, 4,4'-diphenylmethane diisocyanate, isophorone diisocyanate, hexamethylene diisocyanate, 1,3-bis(isocyanatomethyl)cyclohexane, bis(isocyanatocyclohexyl)methane, and phenylene diisocyanate.
15. The optical member according to any one of 1. to 14., in which the bifunctional or higher functional active hydrogen compound (c) contained in the photochromic layer has one or two or more functional groups selected from a hydroxy group, a mercapto group, an amino group, and a carboxyl group.
16. The optical member according to any one of 1. to 15., in which at least one surface has a curved surface, and a curvature radius is more than 0 and 400 mm or less.
17. An optical lens comprising: the optical member according to any one of 1. to 16.
18. A method for producing an optical member, comprising:

a laminating step of laminating a photochromic layer on a surface of a sulfur atom-containing resin substrate, in which the optical member is configured such that a maximum point stress measured by a procedure x is 138 $N/mm^2$ or more and 177 $N/mm^2$ or less,
procedure x: using the optical member, a three-point bending test is performed at 25°C in accordance with JIS K7171, and a maximum point stress ($N/mm^2$) in a case where the test is performed under conditions of a span between fulcrums of 34 mm, a speed of 10 mm/min, and a radius R2 of a support of 2 mm is measured.

19. The method for producing an optical member according to 18., in which the photochromic layer is a cured product of a first polymerizable composition containing the bifunctional or higher functional iso(thio)cyanate compound (a), the hydroxyl group-containing polyether compound (b), the bifunctional or higher functional active hydrogen compound (c), and the photochromic compound (d).
20. The method for producing an optical member according to 18. or 19., in which the sulfur atom-containing resin substrate is a poly(thio)urethane resin substrate or an episulfide-based resin substrate.
21. The method for producing an optical member according to 20., in which in the laminating step, a surface of the episulfide-based resin substrate on which the photochromic layer is laminated is subjected to Fourier transform infrared spectrophotometer (FTIR) analysis by an attenuated total reflectance method (ATR method), and in a case where an absorbance of an absorption peak observed at 2900 to 2970 $cm^{-1}$ is defined as T1 and an absorbance of an absorption peak observed at 2550 to 2700 $cm^{-1}$ is defined as T0, a ratio (%) of T0 to T1 is in a range of 4% to 10%.
22. The method for producing an optical member according to 20. or 21., in which in the laminating step, the episulfide-based resin substrate is a substrate obtained by curing a second polymerizable composition containing the bifunctional or higher functional thiol compound (e) and the bifunctional or higher functional episulfide compound (f) and not subjected to an annealing treatment.
23. The method for producing an optical member according to 20., in which in the laminating step, a surface of the poly(thio)urethane resin substrate on which the photochromic layer is laminated is subjected to Fourier transform infrared spectrophotometer (FTIR) analysis by an attenuated total

reflectance method (ATR method), and in a case where an absorbance of an absorption peak observed at 2900 to 2970 $cm^{-1}$ is defined as A1 and an absorbance of an absorption peak observed at 2250 to 2260 $cm^{-1}$ is defined as A0, a ratio (%) of A0 to A1 is in a range of 30% to 99%.

24. The method for producing an optical member according to 20. or 23.,
in which in the laminating step, the poly(thio)urethane resin substrate is a substrate obtained by curing a second polymerizable composition containing the bifunctional or higher functional iso(thio)cyanate compound (a) and the bifunctional or higher functional thiol compound (e) and not subjected to an annealing treatment.

25. The method for producing an optical member according to any one of 18. to 24.,
in which the annealing treatment is a heat treatment at 50°C or higher and 150°C or lower.

26. The method for producing an optical member according to any one of 18. to 25.,
in which in the laminating step, the photochromic layer is laminated by curing the first polymerizable composition on the surface of the sulfur atom-containing resin substrate.

ADVANTAGEOUS EFFECTS OF INVENTION

The present invention can provide an optical member having improved adhesiveness while maintaining a photochromic function, and a method for producing an optical member.

BRIEF DESCRIPTION OF THE DRAWINGS

[FIG. 1] A cross-sectional view schematically showing an optical member according to the present embodiment.
[FIG. 2] A cross-sectional view schematically showing an example of a process for producing an optical member according to the present embodiment.

DESCRIPTION OF EMBODIMENTS

In the present specification, a denotation "a to b" in the description of a numerical value range represents a or more and b or less unless specified otherwise. For example, "1% to 5% by mass" means "1% by mass or more and 5% by mass or less". In addition, the lower limit value and the upper limit value of the numerical range can be optionally combined with the lower limit value and the upper limit value of another numerical range.

Each component and material exemplified in the present specification may be used alone or in combination of two or more thereof unless otherwise specified.

The expression "(meth)acryl" in the present specification represents a concept including both acryl and methacryl. The same applies to similar expressions such as "(meth)acrylate".

A detailed explanation will be given below of an embodiment of the present invention with reference to the drawings.

To avoid complexity, in a case where there are a plurality of identical constituent components in the same drawing, only one thereof may be labeled with a reference numeral, or not all thereof may be provided with a reference numeral. All the drawings are for illustration purposes only. The shapes, dimensional ratios, and the like of each member in the drawings do not necessarily correspond to the actual article.

<Optical member>

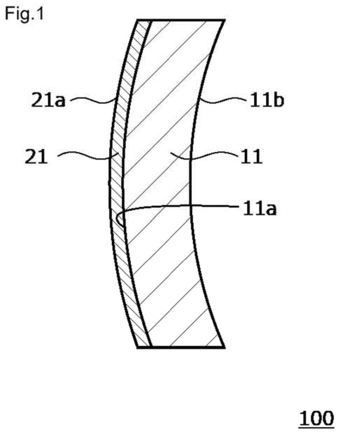

FIG. 1 is a cross-sectional view schematically showing an optical member according to the present embodiment.

An optical member 100 includes a sulfur atom-containing resin substrate 11 and a photochromic layer 21 laminated on a surface 11a of the sulfur atom-containing resin substrate 11, in which the photochromic layer 21 is formed of a cured product of a first polymerizable composition including a bifunctional or higher functional iso(thio)cyanate compound (a), a hydroxyl group-containing polyether compound (b), a bifunctional or higher functional active hydrogen compound (c), and a photochromic compound (d). In addition, in a case where the surface 11b of the sulfur atom-containing resin substrate 11 is an optical lens for eyewear described later, the surface 11b is a surface facing the other eye.

In the present embodiment, the optical member 100 has the photochromic layer 21 laminated on the surface 11a of the sulfur atom-containing resin substrate 11 to be in contact with the surface 11a. In other words, the sulfur atom-containing resin substrate 11 and the photochromic layer 21 are in direct contact with each other, and an adhesive layer or a primer layer is not interposed therebetween. As a result, it is possible to save time and effort for forming an adhesive layer or a primer, to simplify a manufacturing process, and to suppress the occurrence of appearance defects due to an adhesive or a primer.

In addition, in the present embodiment, the photochromic layer 21 is described as an example in which the photochromic layer 21 is laminated on the surface (surface 11a) of the sulfur atom-containing resin substrate 11, but the photochromic layer 21 may be further provided on the surface (surface 11b) side of the sulfur atom-containing resin substrate 11.

In a plan view of the optical member 100, the photochromic layer 21 may be included in a region surrounded by an outer edge of the sulfur atom-containing resin substrate 11.

At least one surface of the optical member 100 has a curved surface, and a radius of curvature thereof is preferably 50 mm or more and 400 mm or less, more preferably 45 mm or more and 350 mm or less, and still more preferably 50 mm or more and 300 mm or less.

In addition, it is preferable that a radius of curvature of one surface of the optical member 100 and a radius of curvature of a surface on the opposite side are the same as each other.

From the viewpoint of easily improving adhesiveness, a thickness of the optical member 100 is preferably 0.5 to 25 mm and more preferably 1 to 12 mm.

In a case where the optical member 100 has a curved surface, the thickness thereof is a geometric center thickness.

In the optical member 100 of the present embodiment, the maximum point stress measured in the procedure x is 138 $N/mm^3$ or more and 177 $N/mm^3$ or less.

Procedure x: a test piece having a size of 65 mm $\times$ 25 mm is prepared using the optical member 100, and a three-point bending test is performed at 25°C in accordance with JIS K7171 using the test piece, and a fracture point test force (N), a maximum point displacement (mm), and a maximum point stress ($N/mm^2$) are measured under conditions of a span between fulcrums of 34 mm, a speed of 10 mm/min, and a radius R2 of a support of 2 mm.

Maximum point stress ($N/mm^2$) = Fracture point test force (N) $\div$ (thickness of test piece (mm) $\times$ width of test piece (mm))

As a result, it is possible to improve the adhesiveness between the sulfur atom-containing resin substrate 11 and the photochromic layer 21 while maintaining the photochromic function. The details of such a reason are not clear, but it is presumed as follows.

Since the optical member 100 has a curved surface as a lens member in many cases, it is considered that a force is likely to be applied to an interlayer portion of the laminated layers of the optical member 100 during edging of the lens, or a state in which a force is constantly applied to the interlayer portion of the laminated layers is maintained after the lens is installed in a post-processing frame, and thus interlayer peeling is likely to occur in a case where the lens is used for a long period of time. Therefore, it is presumed that the adhesiveness between the sulfur atom-containing resin substrate 11 and the photochromic layer 21 of the optical member 100 can be controlled at a higher level by applying a load to the interlayer by a three-point bending test and controlling a stress with respect to a load to the extent that the lens is broken.

In the present embodiment, the sulfur atom-containing resin substrate 11 is preferably an episulfide-based resin substrate (i) or a poly(thio)urethane resin substrate (ii). As a result, high adhesiveness between the sulfur atom-containing resin substrate 11 and the photochromic layer 21 of the optical member 100 can be stably obtained.

In a case where the episulfide-based resin substrate (i) is used, the maximum point stress measured in the procedure x is preferably 140 $N/mm^3$ or more and 150 $N/mm^3$ or less.

Further, in a case where the episulfide-based resin substrate (i) is used, the fracture point test force measured in the above-described procedure x is preferably 24 N or less, more preferably 2 N or more and 20 N or less, and still more preferably 5 N or more and 10 N or less.

As a result, it is possible to more stably improve the adhesiveness between the sulfur atom-containing resin substrate 11 and the photochromic layer 21 while maintaining the photochromic function.

In a case where the poly(thio)urethane resin substrate (ii) is used, the maximum point stress measured in the procedure x is preferably 160 $N/mm^3$ or more and 176 $N/mm^3$ or less.

Further, in a case where the poly(thio)urethane resin substrate (ii) is used, the fracture point test force measured in the above-described procedure x is preferably 24 N or less, and more preferably 10 N or more and 24 N or less.

As a result, it is possible to more stably improve the adhesiveness between the sulfur atom-containing resin substrate 11 and the photochromic layer 21 while maintaining the photochromic function.

The optical member 100 having the above-described maximum point stress and fracture point test force can be realized by controlling the composition of the first polymerizable composition constituting the photochromic layer 21, the composition of the second polymerizable composition constituting the sulfur atom-containing resin substrate 11, and the method for producing the sulfur atom-containing resin substrate 11 or the method for producing the optical member.

Specifically, in a case where the sulfur atom-containing resin substrate 11 is the episulfide-based resin substrate (i), it is considered that the thiol group contained in the episulfide-based resin substrate (i) is chemically bonded to the

isocyanate group contained in the photochromic layer 21 and contributes to the adhesiveness, and thus examples thereof include a method of allowing the thiol group to remain by not performing a heat treatment after polymerizing and curing the second polymerizable composition to obtain the episulfide-based resin substrate (i).

In addition, specifically, in a case where the sulfur atom-containing resin substrate 11 is the poly(thio)urethane resin substrate (ii), it is considered that the isocyanate group contained in the poly(thio)urethane resin substrate (ii) is chemically bonded to the thiol group contained in the photochromic layer 21 and contributes to the adhesiveness, and thus examples thereof include a method of allowing the isocyanate group to remain by not performing a heat treatment after polymerizing and curing the second polymerizable composition to obtain the poly(thio)urethane resin substrate (ii).

In addition, in the optical member 100 of the present embodiment, in a case where the surface 11a and/or the surface 11b of the sulfur atom-containing resin substrate 11 is subjected to Fourier transform infrared spectrophotometer (FTIR) analysis by an attenuated total reflectance method (ATR method), and an absorbance of a maximum absorption peak observed at 2900 to 2970 $cm^{-1}$ is defined as T1 and an absorbance of a maximum absorption peak observed at 2550 to 2700 $cm^{-1}$ is defined as T0, a ratio (%) of T0 to T1 is preferably in a range of 4% to 10%.

The ratio (%) of T0 to T1 is preferably 5% or more, and more preferably 6% or more. As a result, the optical member 100 is suitable as an eyeglass lens, and the adhesiveness can be improved.

On the other hand, the ratio (%) of T0 to T1 is preferably 95% or less, and more preferably 90% or less. As a result, the optical member 100 can be suitably used as an eyeglass lens while maintaining high adhesiveness.

In the optical member 100, by controlling the ratio (%) of T0 to T1, it is possible to improve the adhesiveness between the sulfur atom-containing resin substrate 11 and the photochromic layer 21 while maintaining an excellent lens function. The details of such a reason are not clear, but it is presumed as follows.

First, it is considered that the thiol group contained in the sulfur atom-containing resin substrate 11 is chemically bonded to the isocyanate group contained in the photochromic layer 21 and contributes to the adhesiveness.

In addition, it is considered that the maximum absorption peak observed at 2900 to 2970 $cm^{-1}$ represents O-H absorption, and the absorbance of the maximum absorption peak observed at 2550 to 2700 $cm^{-1}$ represents absorption derived from stretching vibration of the thiol group (-SH). Therefore, it is considered that by defining the absorbance of the maximum absorption peak observed at 2900 to 2970 $cm^{-1}$ as T1, defining the absorbance of the maximum absorption peak observed at 2550 to 2700 $cm^{-1}$ as T0, and setting the ratio (%) of T0 to T1 in a specific range, the chemical bonding by the thiol group can be highly controlled, and the adhesiveness can be improved while maintaining an excellent lens function.

In addition, T1 may be derived from an ultraviolet absorber.

The ratio (%) of T0 to T1 in the optical member 100 of the present embodiment can be realized by controlling the composition of the first polymerizable composition constituting the photochromic layer 21, the composition of the second polymerizable composition constituting the sulfur atom-containing resin substrate 11, and the method for producing the sulfur atom-containing resin substrate 11 or the method for producing the optical member, which will be described later.

Specifically, since it is considered that the amount of the thiol group in the sulfur atom-containing resin substrate is controlled or the ratio (%) of T0 to T1 in the sulfur atom-containing resin substrate 11 is reduced by a heat treatment, examples thereof include a method in which the second polymerizable composition is polymerized and cured to obtain the sulfur atom-containing resin substrate 11, and then a heat treatment is not performed.

In addition, in the optical member 100 of the present embodiment, in a case where the surface 11a and/or the surface 11b of the sulfur atom-containing resin substrate 11 is analyzed by a Fourier transform infrared spectrophotometer (FTIR) using an attenuated total reflectance method (ATR method), and the absorbance of the maximum absorption peak observed at 2900 to 2970 $cm^{-1}$ is defined as A1 and the absorbance of the maximum absorption peak observed at 2250 to 2260 $cm^{-1}$ is defined as A0, the ratio (%) of A0 to A1 is preferably in a range of 30% to 99%.

The ratio (%) of A0 to A1 is preferably 35% or more, and more preferably 40% or more. As a result, it is possible to improve the adhesiveness while maintaining the photochromic function.

On the other hand, the ratio (%) of A0 to A1 is preferably 95% or less, and more preferably 90% or less. As a result, it is possible to stably obtain a satisfactory photochromic function while maintaining high adhesiveness.

In the optical member 100, by controlling the ratio (%) of A0 to A1, it is possible to improve the adhesiveness between the sulfur atom-containing resin substrate 11 and the photochromic layer 21 while maintaining the photochromic function. The details of such a reason are not clear, but it is presumed as follows.

First, it is considered that the isocyanate group contained in the sulfur atom-containing resin substrate 11 is chemically bonded to the thiol group contained in the photochromic layer 21, which contributes to the adhesiveness. On the other hand, it is presumed that, in a case where the thiol group of the photochromic layer 21 is excessively bonded to the isocyanate group on the sulfur atom-containing resin substrate 11 side, the photochromic function is likely to be deteriorated.

In addition, it is considered that the maximum absorption peak observed at 2900 to 2970 $cm^{-1}$ represents C-H absorption, and the absorbance of the maximum absorption peak observed at 2250 to 2260 $cm^{-1}$ represents absorption derived from stretching vibration of NCO. Therefore, it is considered that, by defining the absorbance of the maximum absorption peak observed at 2900 to 2970 $cm^{-1}$ as A1, defining the absorbance of the maximum absorption peak observed

at 2250 to 2260 $cm^{-1}$ as A0, and setting the ratio (%) of A0 to A1 in a specific range, the chemical bonding by the isocyanate group can be highly controlled, and it is possible to improve the adhesiveness while maintaining the photochromic function.

In addition, A1 may be derived from an ultraviolet absorber.

The ratio (%) of A0 to A1 in the optical member 100 of the present embodiment can be realized by controlling the composition of the first polymerizable composition constituting the photochromic layer 21, the composition of the second polymerizable composition constituting the poly(thio)urethane resin substrate 11, and the method for producing the poly(thio)urethane resin substrate 11 or the method for producing the optical member.

Specifically, since it is considered that the equivalent ratio of the thiol group to the isocyanate group in the poly(thio)urethane resin substrate is controlled, or the ratio (%) of A0 to A1 in the poly(thio)urethane resin substrate 11 is reduced by a heat treatment, examples thereof include a method in which the second polymerizable composition is polymerized and cured to obtain the poly(thio)urethane resin substrate 11, and then the heat treatment is not performed.

Hereinafter, each configuration of the optical member 100 will be described.

[Sulfur atom-containing resin substrate 11]

The sulfur atom-containing resin substrate 11 serves as a base of the optical member 100 and constitutes the outer shape of the optical member 100.

The thickness of the sulfur atom-containing resin substrate 11 is preferably 0.5 to 20 mm, more preferably 1.0 to 17 mm, and still more preferably 2.0 to 15 mm.

The ratio (thickness of sulfur atom-containing resin substrate 11/thickness of photochromic layer 21) of the thickness (mm) of the sulfur atom-containing resin substrate 11 to the thickness (mm) of the photochromic layer 21 is preferably 0.5 to 10, more preferably 1 to 7, and still more preferably 2 to 5.

In a case where the sulfur atom-containing resin substrate 11 and the photochromic layer 21 have a curved surface, the thickness thereof is a geometric center thickness.

The thickness can be measured by a dial thickness gauge: SM130 manufactured by Teclock Co., Ltd.

The sulfur atom-containing resin substrate 11 may have a flat surface or a curved surface depending on the purpose of the optical lens. In addition, at least one surface of the sulfur atom-containing resin substrate 11 has a curved surface, and the curvature radius thereof is preferably more than 0 and 400 mm or less, more preferably 5 mm or more and 380 mm or less, still more preferably 30 mm or more and 360 mm or less, even still more preferably 45 mm or more and 350 mm or less, and even further more preferably 50 mm or more and 300 mm or less.

In addition, it is preferable that the curvature radius of one surface of the sulfur atom-containing resin substrate 11 and the curvature radius of the opposite surface thereof are the same as each other.

The sulfur atom-containing resin substrate 11 is obtained by curing a second polymerizable composition. As a result, the adhesiveness to the photochromic layer 21 can be effectively improved.

In a case where the sulfur atom-containing resin substrate 11 is an episulfide-based resin substrate (i), the second polymerizable composition preferably contains a bifunctional or higher functional thiol compound (e) and a bifunctional or higher functional episulfide compound (f), and in a case where the sulfur atom-containing resin substrate 11 is a poly(thio)urethane resin substrate (ii), the second polymerizable composition preferably contains a bifunctional or higher functional iso(thio)cyanate compound (a) and a bifunctional or higher functional thiol compound (e).

In addition, in a case where the episulfide-based resin substrate (i) is used, the equivalent ratio of the thiol group to the episulfide group in the sulfur atom-containing resin substrate 11 is preferably 1:99 to 30:70, more preferably 2:98 to 20:80, and still more preferably 3:97 to 10:90.

In addition, the equivalent ratio of the thiol group to the isocyanate group in the poly(thio)urethane resin substrate (ii) is preferably 40:60 to 60:40, more preferably 45:55 to 55:45, and still more preferably 48:52 to 52:48.

Hereinafter, each component will be described.

(Bifunctional or higher functional thiol compound (e))

Examples of the bifunctional or higher functional thiol compound (e) include a polythiol compound having two or more mercapto groups, and one kind or two or more kinds thereof may be used in a mixed form. Examples of these thiol compounds include the compounds exemplified in WO2016/125736A.

Examples of the bifunctional or higher functional thiol compound (e) include one kind or two or more kinds selected from 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, pentaerythritol tetrakis(2-mercaptoacetate), pentaerythritol tetrakis(3-mercaptopropionate), bis(mercaptoethyl)sulfide, 2,5-dimercaptomethyl-1,4-dithiane, 1,1,3,3-tetrakis(mercaptomethylthio)propane, 4,6-bis(mercaptomethylthio)-1,3-dithiane, and 2-(2,2-bis(mercaptomethylthio)ethyl)-1,3-dithiethane.

The content of the bifunctional or higher functional thiol compound (e) is preferably 2% to 80% by mass, more

preferably 5% to 70% by mass, and still more preferably 8% to 60% by mass with respect to the total amount of the sulfur atom-containing resin substrate 11.

In a case where the bifunctional or higher functional episulfide compound (f) is contained, the content of the bifunctional or higher functional thiol compound (e) is preferably 2 to 20 parts by mass, more preferably 5 to 15 parts by mass, and still more preferably 8 to 12 parts by mass with respect to 100 parts by mass of the episulfide compound (f).

In a case where the bifunctional or higher functional iso(thio)cyanate compound (a) is contained, the content of the bifunctional or higher functional thiol compound (e) is preferably 60 to 150 parts by mass, more preferably 80 to 120 parts by mass, and still more preferably 90 to 110 parts by mass with respect to 100 parts by mass of the iso(thio)cyanate compound (a).

(Episulfide compound (f))

The episulfide compound (f) is a compound having two or more episulfide groups in one molecule, and is preferably an episulfide compound represented by Formula (1).

[chem. 1]

S
S — S
S
(1)

Specific examples of the episulfide compound (f) include chain-like aliphatic β-epithiopropylthio compounds such as bis(β-epithiopropyl)sulfide, bis(β-epithiopropyl)disulfide, bis(β-epithiopropylthio)methane, 1,2-bis(β-epithiopropylthio)ethane, 1,2-bis(β-epithiopropylthio)propane, 1,3-bis(β-epithiopropylthio)propane, 1,3-bis(β-epithiopropylthio)-2-methylpropane, 1,4-bis(β-epithiopropylthio)butane, 1,4-bis(β-epithiopropylthio)-2-methylbutane, 1,3-bis(β-epithiopropylthio)butane, 1,5-bis(β-epithiopropylthio)pentane, 1,5-bis(β-epithiopropylthio)-2-methylpentane, 1,5-bis(β-epithiopropylthio)-3-thiapentane, 1,6-bis(β-epithiopropylthio)hexane, 1,6-bis(β-epithiopropylthio)-2-methylhexane, 3,8-bis(β-epithiopropylthio)-3,6-dithiaoctane, 1,2,3-tris(β-epithiopropylthio)propane, 2,2-bis(β-epithiopropylthio)-1,3-bis(β-epithiopropylthiomethyl)propane, 2,2-bis(β-epithiopropylthiomethyl)-1-(β-epithiopropylthio)butane, 1,5-bis(β-epithiopropylthio)-2-(β-epithiopropylthiomethyl)-3-thiapentane, 1,5-bis(β-epithiopropylthio)-2,4-bis(β-epithiopropylthiomethyl)-3-thiapentane, 1-(β-epithiopropylthio)-2,2-bis(β-epithiopropylthiomethyl)-4-thiahexane, 1,8-bis(β-epithiopropylthio)-4-(β-epithiopropylthiomethyl)-3,6-dithiaoctane, 1,8-bis(β-epithiopropylthio)-4,5-bis(β-epithiopropylthiomethyl)-3,6-dithiaoctane, 1,8-bis(β-epithiopropylthio)-4,4-bis(β-epithiopropylthiomethyl)-3,6-dithiaoctane, 1,8-bis(β-epithiopropylthio)-2,5-bis(β-epithiopropylthiomethyl)-3,6-dithiaoctane, 1,8-bis(β-epithiopropylthio)-2,4,5-tris(β-epithiopropylthiomethyl)-3,6-dithiaoctane, 1,1,1-tris[{2-(β-epithiopropylthio)ethyl}thiomethyl]-2-(β-epithiopropylthio)ethane, 1,1,2,2-tetrakis[{2-(β-epithiopropylthio)ethyl}thiomethyl]ethane, 1,11-bis(β-epithiopropylthio)-4,8-bis(β-epithiopropylthiomethyl)-3,6,9-trithiaundecane, 1,11-bis(β-epithiopropylthio)-4,7-bis(β-epithiopropylthiomethyl)-3,6,9-trithiaundecane, and 1,11-bis(β-epithiopropylthio)-5,7-bis(β-epithiopropylthiomethyl)-3,6,9-trithiaundecane; cyclic aliphatic β-epithiopropylthio compounds such as 1,3-bis(β-epithiopropylthio)cyclohexane, 1,4-bis(β-epithiopropylthio)cyclohexane, 1,3-bis(β-epithiopropylthiomethyl)cyclohexane, 1,4-bis(β-epithiopropylthiomethyl)cyclohexane, 2,5-bis(β-epithiopropylthiomethyl)-1,4-dithiane, and 2,5-bis[{2-(β-epithiopropylthio)ethyl}thiomethyl]-1,4-dithiane; and aromatic β-epithiopropylthio compounds such as 1,3-bis(β-epithiopropylthio)benzene, 1,4-bis(β-epithiopropylthio)benzene, 1,3-bis(β-epithiopropylthiomethyl)benzene, 1,4-bis(β-epithiopropylthiomethyl)benzene, bis{4-(β-epithiopropylthio)phenyl}methane, 2,2-bis{4-(β-epithiopropylthio)phenyl}propane, bis{4-(β-epithiopropylthio)phenyl}sulfide, bis{4-(β-epithiopropylthio)phenyl}sulfone, and 4,4'-bis(β-epithiopropylthio)biphenyl. In addition, these compounds may be used alone or in a mixed form of two or more kinds thereof.

Furthermore, polysulfide oligomers such as a dimer, a trimer, and a tetramer of these episulfide compounds (f), episulfide resins having a mercapto group, which are generated in a case where epichlorohydrin is insufficient in a case of synthesizing the episulfide compound (f), and further, organic compounds such as inorganic acids and organic acids, a solvent, unreacted raw materials, and other by-products and impurities, which are used in the episulfide synthesis, may be contained within a range that does not cause a problem.

In a case where a lens is obtained in the present embodiment, polymerization is carried out by heating or being left at room temperature in the presence or absence of a curing catalyst, and the lens can be manufactured. However, in a case where there is no curing catalyst, the polymerization may not proceed well and may cause polymerization defects, or the polymerization may not occur. As the curing catalyst, amines, phosphines, Lewis acids, radical polymerization catalysts, cationic polymerization catalysts, and the like are usually used.

The content of the episulfide compound (f) is preferably 80% to 99% by mass, more preferably 85% to 95% by mass, and still more preferably 88% to 92% by mass with respect to the total amount of the sulfur atom-containing resin substrate 11.

(Bifunctional or higher functional iso(thio)cyanate compound (a))

The bifunctional or higher functional iso(thio)cyanate compound (a) is an iso(thio)cyanate compound having two or more iso(thio)cyanato groups, and the iso(thio)cyanate compound means an isocyanate compound or an isothiocyanate compound.

Examples of the iso(thio)cyanate compound (a) of the present embodiment include an alicyclic polyiso(thio)cyanate compound, an aromatic polyiso(thio)cyanate compound, and modified products thereof.

More specific examples of the isocyanate compound include alicyclic polyisocyanate compounds such as isophorone diisocyanate, hexamethylene diisocyanate, bis(isocyanatomethyl)cyclohexane, dicyclohexylmethane-4,4'-diisocyanate, cyclohexane diisocyanate, methylcyclohexane diisocyanate, dicyclohexyldimethylmethane isocyanate, 2,5-bis(isocyanatomethyl)bicyclo-[2.2.1]-heptane, 2,6-bis(isocyanatomethyl)bicyclo-[2.2.1]-heptane, 3,8-bis(isocyanatomethyl)tricyclodecane, 3,9-bis(isocyanatomethyl)tricyclodecane, 4,8-bis(isocyanatomethyl)tricyclodecane, and 4,9-bis(isocyanatomethyl)tricyclodecane; and aromatic polyisocyanate compounds such as phenylene diisocyanate, 2,4-tolylene diisocyanate, 2,6-tolylene diisocyanate, 4,4'-diphenylmethane diisocyanate, and diphenyl sulfide-4,4'-diisocyanate.

Examples of the isothiocyanate compound include alicyclic polyisothiocyanate compounds such as isophorone diisothiocyanate, bis(isothiocyanatomethyl)cyclohexane, dicyclohexylmethane diisothiocyanate, cyclohexane diisothiocyanate, methylcyclohexane diisothiocyanate, 2,5-bis(isothiocyanatomethyl)bicyclo-[2.2.1]-heptane, 2,6-bis(isothiocyanatomethyl)bicyclo-[2.2.1]-heptane, 3,8-bis(isothiocyanatomethyl)tricyclodecane, 3,9-bis(isothiocyanatomethyl)tricyclodecane, 4,8-bis(isothiocyanatomethyl)tricyclodecane, and 4,9-bis(isothiocyanatomethyl)tricyclodecane; and aromatic polyisothiocyanate compounds such as tolylene diisothiocyanate, 4,4'-diphenylmethane diisothiocyanate, and diphenyldisulfide-4,4'-diisothiocyanate.

As the iso(thio)cyanate compound (a), a halogen-substituted product such as a chlorine-substituted product and a bromine-substituted product, an alkyl-substituted product, an alkoxy-substituted product, a nitro-substituted product, a prepolymer-type modified product with a polyhydric alcohol, a carbodiimide-modified product, a urea-modified product, a biuret-modified product, a dimerization or trimerization reaction product, and the like can also be used.

In addition, one kind or two or more kinds selected from these can be used in combination as the iso(thio)cyanate compound (a).

Among these, it is preferable that the bifunctional or higher functional iso(thio)cyanate compound (a) is one kind or two or more kinds selected from xylylene diisocyanate or a hydrogenated product thereof, 2,5-bis(isocyanatomethyl)bicyclo-[2.2.1]-heptane, 2,6-bis(isocyanatomethyl)bicyclo-[2.2.1]-heptane, tolylene diisocyanate, 4,4'-diphenylmethane diisocyanate, isophorone diisocyanate, hexamethylene diisocyanate, 1,3-bis(isocyanatomethyl)cyclohexane, bis(isocyanatocyclohexyl)methane, and phenylene diisocyanate.

The content of the bifunctional or higher functional iso(thio)cyanate compound (a) is preferably 40% to 60% by mass, more preferably 45% to 55% by mass, and still more preferably 48% to 52% by mass with respect to the total amount of the sulfur atom-containing resin substrate 11.

(Others)

The second polymerizable composition may further contain additives such as an ultraviolet absorber, a catalyst, an internal release agent, a resin modifier, a light stabilizer, an antioxidant, and a coloration inhibitor, depending on the characteristics desired for the application.

Examples of the ultraviolet absorber include a benzophenone-based compound, a triazine-based compound, and a benzotriazole-based compound.

Examples of the benzophenone-based ultraviolet absorber include 2,2'-dihydroxy-4-methoxybenzophenone, 2-hydroxy-4-acryloyloxybenzophenone, 2-hydroxy-4-acryloyloxy-5-tert-butylbenzophenone, and 2-hydroxy-4-acryloyloxy-2',4'-dichlorobenzophenone.

Examples of the triazine-based ultraviolet absorber include 2-[4-[(2-hydroxy-3-dodecyloxypropyl)oxy]-2-hydroxyphenyl]-4,6-bis(2,4-dimethylphenyl)-1,3,5-triazine, 2-[4-[(2-hydroxy-3-tridecyloxypropyl)oxy]-2-hydroxyphenyl]-4,6-bis(2,4-dimethylphenyl)-1,3,5-triazine, 2-[4-[(2-hydroxy-3-(2'-ethyl)hexyl)oxy]-2-hydroxyphenyl]-4,6-bis(2,4-dimethylphenyl)-1,3,5-triazine, 2,4-bis(2-hydroxy-4-butyloxyphenyl)-6-(2,4-bis-butyloxyphenyl)-1,3,5-triazine, and 2-(2-hydroxy-4-[1-octyloxycarbonylethoxy]phenyl)-4,6-bis(4-phenylphenyl)-1,3,5-triazine.

Examples of the benzotriazole-based ultraviolet absorber include 2-(2'-hydroxy-5-t-octylphenyl)-benzotriazole, 2-(2H-benzotriazol-2-yl)-4-methylphenol, 2-(2H-benzotriazol-2-yl)-4-tert-octylphenol, 2-(2H-benzotriazol-2-yl)-4,6-

bis(1-methyl-1-phenylethyl)phenol, 2-(2H-benzotriazol-2-yl)-4,6-di-tert-pentylphenol, 2-(5-chloro-2H-benzotriazol-2-yl)-4-methyl-6-tertbutylphenol, 2-(5-chloro-2H-benzotriazol-2-yl)-2,4-tertbutylphenol, and 2,2'-methylenebis[6-(2H-benzotriazol-2-yl)-4-(1,1,3,3-tetramethylbutyl)phenol]. One kind of the ultraviolet absorber may be used alone, or two or more kinds thereof may be used in combination.

Examples of the catalyst include one kind or two or more kinds selected from a Lewis acid, a tertiary amine, an organic acid, and an amine organic acid salt. Among these, a Lewis acid, an amine, and an amine organic acid salt are preferable, and dimethyltin chloride, dibutyltin dichloride, and dibutyltin laurate are more preferable.

An internal release agent may be contained for the purpose of improving the releasability from the mold after molding.

An acidic phosphate ester can be used as the internal release agent. Examples of the acidic phosphate ester include a phosphate monoester and a phosphate diester, each of which can be used alone or in a combination of two or more kinds thereof. As a commercially available product of the internal release agent, for example, ZelecUN manufactured by Stepan Company, an internal release agent for MR manufactured by Mitsui Chemicals, Inc., JP Series manufactured by JOHOKU CHEMICAL CO., LTD., PHOSPHANOL Series manufactured by TOHO Chemical Industry Co., Ltd., and AP or DP Series manufactured by DAIHACHI CHEMICAL INDUSTRY CO., LTD. can be used.

A resin modifier may be contained for the purpose of adjusting various physical properties such as optical properties, impact resistance, and specific gravity, and adjusting the viscosity and pot life.

Examples of the resin modifier include an episulfide compound, an alcohol compound other than the above-mentioned polyol compound, an amine compound other than the above-mentioned amine compound, an epoxy compound, an organic acid and an anhydride thereof, and an olefin compound including a (meth)acrylate compound and the like.

As the light stabilizer, a hindered amine compound which is a compound having a 2,2,6,6-tetramethylpiperidine skeleton or a 1,2,2,6,6-pentamethylpiperidine skeleton can be used. Examples of a commercially available product of the hindered amine compound include Lowilite 76 and Lowilite 92 manufactured by Chemtura Corporation, Tinuvin 144, Tinuvin 292, and Tinuvin 765 manufactured by BASF, ADEKA STAB LA-52 and LA-72 manufactured by ADEKA Corporation, JF-95 manufactured by Johoku Chemical Co., Ltd., and Hostavin PR-25 manufactured by Clariant Chemicals.

[Photochromic layer 21]

The photochromic layer 21 is a layer for imparting a photochromic function to the optical member 100.

The photochromic layer 21 is provided to be in contact with at least one surface of the sulfur atom-containing resin substrate 11.

A thickness of the photochromic layer 21 is preferably 0.1 to 5 mm, more preferably 0.2 to 3 mm, and still more preferably 0.4 to 2 mm.

At least one surface of the photochromic layer 21 has a curved surface, and a radius of curvature thereof is preferably 30 mm or more and 400 mm or less, more preferably 45 mm or more and 350 mm or less, and still more preferably 50 mm or more and 300 mm or less.

In addition, it is preferable that the radius of curvature of one surface of the photochromic layer 21 and the radius of curvature of the surface on the opposite side are the same as each other.

(First polymerizable composition)

The photochromic layer 21 is a cured product of a first polymerizable composition containing a bifunctional or higher functional iso(thio)cyanate compound (a), a hydroxyl group-containing polyether compound (b), a bifunctional or higher functional active hydrogen compound (c), and a photochromic compound (d). As a result, the adhesiveness to the sulfur atom-containing resin substrate 11 can be effectively improved.

Hereinafter, each component will be described.

(Bifunctional or higher functional iso(thio)cyanate compound (a))

As the bifunctional or higher functional iso(thio)cyanate compound (a), the same compound as that described in the section of the second polymerizable composition can be used.

The iso(thio)cyanate compound (a) in the second polymerizable composition may be the same as or different from the iso(thio)cyanate compound (a) in the first polymerizable composition.

A content of the bifunctional or higher functional iso(thio)cyanate compound (a) is preferably 30% to 70% by mass, more preferably 35% to 60% by mass, and still more preferably 40% to 55% by mass with respect to the total amount of the photochromic layer 21.

(Hydroxyl group-containing polyether compound (b))

The hydroxyl group-containing polyether compound (b) of the present embodiment is a polyether compound containing at least one hydroxyl group, and contains at least one polyether segment.

The hydroxyl group-containing polyether compound (b) of the present embodiment is preferably a block copolymer that may be combined with at least one segment of any of polyester, polycarbonate, poly(meth)acrylate, polyamide, polyethyleneimine, polysiloxane, polysulfide, polyolefin, or polystyrene, in addition to the polyether.

In addition, another embodiment of the hydroxyl group-containing polyether compound (b) of the present embodiment is a linear polyether block copolymer having at least two different segments. Examples of the structure of the segment include a segment structure having a divalent organic group derived from ethylene glycolate, propylene glycolate, butylene glycolate, or the like, or a divalent organic group derived from ethanedithiol, propanedithiol, or the like.

The above-described polyether is not particularly limited, and examples thereof include polyethylene glycol, polypropylene glycol, polybutylene glycol, and the like.

The above-described polyester is not particularly limited, and includes those obtained by condensation of a dicarboxylic acid and a diol.

Examples of the above-described dicarboxylic acid include adipic acid, succinic acid, and the like, or a combination thereof.

Examples of the above-described diol include ethylene-1,2-diol, butane-1,4-diol, hexane-1,6-diol, propane-1,2-diol, 3-methylpentane-1,5-diol, 2-methylpropane-1,3-diol, 2,2-dimethylpropane-1,3-diol, diethylene glycol, triethylene glycol, dipropylene glycol, tripropylene glycol, pentane-1,5-diol, heptane-1,7-diol, and the like, or a combination thereof.

Examples of the above-described polyester also include polycaprolactone, polybutyrolactone, polyvalerolactone, polylactic acid, polyglycolic acid, and a combination thereof.

The above-described polycarbonate is not particularly limited, and examples thereof include those obtained by condensation of a carbonate and a diol.

Examples of the above-described diol include ethylene-1,2-diol, butane-1,4-diol, hexane-1,6-diol, propane-1,2-diol, 3-methylpentane-1,5-diol, 2-methylpropane-1,3-diol, 2,2-dimethylpropane-1,3-diol, pentane-1,5-diol, heptane-1,7-diol, diethylene glycol, triethylene glycol, dipropylene glycol, tripropylene glycol, and the like, or a combination thereof.

The above-described poly(meth)acrylate is not particularly limited, and examples thereof include methyl (meth) acrylate, butyl (meth)acrylate, hexyl (meth)acrylate, 2-ethylhexyl (meth)acrylate, 2-hydroxyethyl (meth)acrylate, benzyl (meth)acrylate, phenyl (meth)acrylate, and the like, or a combination thereof.

The above-described polyamide is not particularly limited, and examples thereof include those obtained by condensation of a dicarboxylic acid and a diamine.

Examples of the above-described dicarboxylic acid include adipic acid, succinic acid, and the like, or a combination thereof. Examples of the above-described diamine include hexamethylenediamine and the like.

Examples of the above-described polyamide also include lactam such as polycaprolactam.

Examples of the above-described polyethyleneimine include a polyethyleneimine chain, a polypropionylaziridine chain, a polyacetylaziridine chain, a polyformylaziridine chain, and the like as a polyethyleneimine chain which is a polymer chain.

Examples of the above-described polysiloxane include a polydimethylsiloxane chain, a polymethylphenylsiloxane chain, and the like as a polysiloxane chain which is a polymer chain.

The above-described polysulfide can include a polyethylene sulfide chain and the like.

Examples of the above-described polyolefin include polyethylene, polypropylene, and the like, or a combination thereof.

Examples of the above-described polystyrene include polystyrene, polystyrene sulfonate, and the like, or a combination thereof.

The hydroxyl group-containing polyether compound (b) of the present embodiment forms a domain structure. Specifically, micelles are preferably formed by microphase separation, and a uniformly dispersed nanosized structure can be provided. The micelle structure can effectively disperse a functional compound such as a photochromic dye while maintaining mechanical properties and optical properties in the optical member 100 of the present embodiment.

The number of hydroxyl groups per molecule of the hydroxyl group-containing polyether compound (b) is preferably 1 to 10, more preferably 1 to 8, and still more preferably 1 to 6. By setting the number of hydroxyl groups per molecule of the hydroxyl group-containing polyether compound (b) within the above-described numerical range, the function is more easily exhibited, and for example, the performance such as the color density and the coloration-decoloration speed of the photochromic compound can be improved.

The number average molecular weight of the hydroxyl group-containing polyether compound (b) is preferably 500 to 50,000, more preferably 1,000 to 30,000, and still more preferably 2,000 to 20,000. By setting the number average molecular weight of the hydroxyl group-containing polyether compound (b) to be equal to or more than the above-described lower limit value, the photochromic performance is easily improved. On the other hand, by setting the number

average molecular weight of the hydroxyl group-containing polyether compound (b) to be equal to or less than the above-described upper limit value, the turbidity of the optical member 100 can be suppressed while the photochromic function is satisfactorily maintained.

The content of the hydroxyl group-containing polyether compound (b) is preferably 1% to 25% by mass, more preferably 2% to 20% by mass, and still more preferably 3% to 18% by mass with respect to the total amount of the photochromic layer 21.

(Bifunctional or higher functional active hydrogen compound (c))

The active hydrogen compound (c) of the present embodiment has two or more functional groups. Examples of the functional group include a hydroxy group, a mercapto group, an amino group, and a carboxyl group.

Examples of the active hydrogen compound (c) include a poly(thio)ol compound having two or more hydroxy groups or mercapto groups, a polyamine compound having two or more primary amino groups or secondary amino groups, and a polycarboxylic acid compound having two or more carboxyl groups. In addition, examples thereof also include a compound having two or more active hydrogen groups selected from a hydroxy group, a mercapto group, a primary amino group, a secondary amino group, a carboxyl group, and the like in one molecule. Two or more active hydrogen groups may be the same or different.

Examples of the bifunctional or higher functional active hydrogen compound (c) having a mercapto group include the same compounds as those for the bifunctional or higher functional thiol compound (e).

Examples thereof include bifunctional or higher functional active hydrogen compounds having a hydroxyl group, such as ethylene glycol, polyethylene glycol, propylene glycol, polypropylene glycol, glycerin, polyglycerin, and thioglycerin; bifunctional or higher functional active hydrogen compounds having a mercapto group, such as trithioglycerin, pentaerythritol tetrakis(thioglycolate), trimethylolpropane(3-mercaptopropionate), pentaerythritol tetrakis(3-mercaptopropionate), dipentaerythritol hexa(3-mercaptopropionate), bis(2-mercaptoethyl)sulfide, 4-mercaptomethyl-3,6-dithiaoctane-1,8-dithiol, 4,8-bis(mercaptomethyl)-3,6,9-trithiaundecane-1,11-dithiol, 4,7-bis(mercaptomethyl)-3,6,9-trithiaundecane-1,11-dithiol, 5,7-bis(mercaptomethyl)-3,6,9-trithiaundecane-1,11-dithiol, 1,1,3,3-tetrakis(mercaptomethyl)-2-thiapropane, 1,4-dithiane-2,5-dithiol, 2,5-bis(mercaptomethyl)-1,4-dithiane, and xylylenedithiol; and bifunctional or higher functional active hydrogen compounds having an amino group, such as xylylenediamine, $\alpha,\alpha,\alpha',\alpha'$-tetramethyl-xylylenediamine, 1,5-diaminopentane, 1,6-diaminohexane, diaminopolypropylene, diaminopolyethylene, isophoronediamine, bis(aminocyclohexyl)methane, bis(aminomethyl)cyclohexane, and bis(aminomethyl)norbornane.

The content of the bifunctional or higher functional active hydrogen compound (c) is preferably 25% to 55% by mass, more preferably 30% to 50% by mass, and still more preferably 35% to 45% by mass with respect to the total amount of the photochromic layer 21.

(Photochromic compound (d))

Examples of the photochromic compound (d) include a compound having light absorption characteristics (absorption spectrum) that change with respect to light having a specific wavelength.

As the photochromic compound (d) of the present embodiment, known compounds can be used, and examples thereof can be obtained by the methods described in WO2009/146509A, WO2010/20770A, WO2012/149599A, and WO2012/162725A. Specific examples thereof include a spirooxazine-based compound, a spirooxazine-based compound, a fulgide-based compound, a naphthopyran-based compound, and a bisimidazole compound. Among these, a naphthopyran-based compound or a spirooxazine-based compound is preferable, and a naphthopyran-based compound having no active hydrogen is more preferable.

The content of the photochromic compound (d) is preferably 0.1% to 5% by mass, more preferably 0.2% to 2% by mass, and still more preferably 0.3% to 1% by mass with respect to the total amount of the photochromic layer 21.

(Others)

The first polymerizable composition may further contain known additives such as a resin modifier, a light stabilizer, an antioxidant, and a coloration inhibitor, depending on the characteristics desired for the application.

From the viewpoint of easily applying the first polymerizable composition to the production method described later, the viscosity of the first polymerizable composition used in the present embodiment can be preferably 5 to 1,000 mPa·s and more preferably 10 to 500 mPa·s.

<Method for Producing Optical Member 100>

Next, an example of a method for producing the optical member 100 of the present embodiment will be described.

The method for producing the optical member 100 of the present embodiment includes a step of laminating the photochromic layer 21 on the surface 11a of the sulfur atom-containing resin substrate 11. That is, the photochromic layer 21 is disposed to be in direct contact with the surface 11a of the sulfur atom-containing resin substrate 11. Hereinafter, details will be described.

First, a second polymerizable composition is prepared and cured by a known method to obtain the sulfur atom-containing resin substrate 11. The curing conditions can be, for example, curing by thermal polymerization within 48 hours in a range of 20°C to 150°C.

The sulfur atom-containing resin substrate 11 obtained after the curing is laminated with the photochromic layer 21 described later as it is without being subjected to an annealing treatment. The annealing treatment is a heat treatment at 50°C or higher and 150°C or lower, and from the viewpoint of further improving the appearance, it is preferably 50°C or higher and 130°C or lower. In other words, after the second polymerizable composition is cured to obtain the sulfur atom-containing resin substrate 11, the sulfur atom-containing resin substrate 11 is not subjected to a heat treatment at 50°C or higher and 150°C or lower.

As a result, the sulfur atom-containing resin substrate 11 in which the thiol group is retained on the surface is obtained, and the optical member 100 having good adhesiveness is obtained.

In addition, before the photochromic layer 21 is laminated, it is preferable that the surface of the sulfur atom-containing resin substrate 11 is subjected to Fourier transform infrared spectrophotometer (FTIR) analysis by an attenuated total reflectance method (ATR method), and in a case where an absorbance of an absorption peak observed at 2900 to 2970 $cm^{-1}$ is defined as T1 and an absorbance of an absorption peak observed at 2550 to 2700 $cm^{-1}$ is defined as T0, a ratio (%) of T0 to T1 is in a range of 4% to 10%.

Among these, it is preferable to perform the FTIR analysis on the surface of the sulfur atom-containing resin substrate 11 immediately after the polymerization and curing. That is, it is preferable that the change in the absorption peak does not occur due to the passage of time after the polymerization and curing or the like.

In addition, before the photochromic layer 21 is laminated, it is preferable that the surface of the sulfur atom-containing resin substrate 11 is subjected to Fourier transform infrared spectrophotometer (FTIR) analysis by an attenuated total reflectance method (ATR method), and in a case where an absorbance of an absorption peak observed at 2900 to 2970 $cm^{-1}$ is defined as A1 and an absorbance of an absorption peak observed at 2250 to 2260 $cm^{-1}$ is defined as A0, a ratio (%) of A0 to A1 is in a range of 30% to 99%.

Among these, it is preferable to perform the FTIR analysis on the surface of the sulfur atom-containing resin substrate 11 immediately after the polymerization and curing. That is, it is preferable that the change in the absorption peak does not occur due to the passage of time after the polymerization and curing or the like.

Next, the photochromic layer 21 is laminated on at least one surface of the obtained sulfur atom-containing resin substrate 11. The lamination method is not particularly limited, and a known method can be used.

Examples thereof include (i) a method of bonding the photochromic layer 21 in a film or sheet shape to at least one surface of the sulfur atom-containing resin substrate 11, and (ii) a method of disposing the sulfur atom-containing resin substrate 11 along an inner wall of a cavity in a molding mold held by a gasket, a tape, or the like, and then injecting the first polymerizable composition into the cavity and curing the first polymerizable composition.

The photochromic layer 21 in a film or sheet shape, which is used in the above-described method (i), is not particularly limited, and the first polymerizable composition obtained by melt kneading, impregnation, or the like can be obtained by various known methods in the related art, specifically, for example, molding methods such as an injection molding method, a profile extrusion molding method, a pipe forming method, a tube forming method, a coating molding method for dissimilar molded bodies, an injection blow molding method, a direct blow molding method, a T-die sheet or film forming method, an inflation film forming method, and a press molding method. A known method can be used as a method of bonding the photochromic layer 21 in a film or sheet shape to the surface of the sulfur atom-containing resin substrate 11.

The cast polymerization in the above-described method (ii) can be performed, for example, by the following procedure x using a known injection molding apparatus.

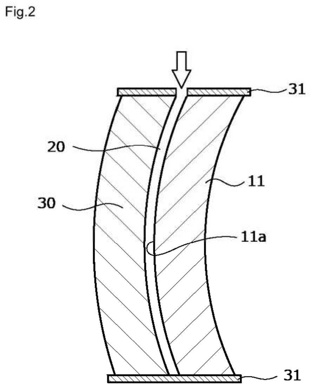

FIG. 2 is a cross-sectional view schematically showing an example of a manufacturing process of the optical member 100 according to the present embodiment. FIG. 2 shows an injection molding apparatus including the sulfur atom-containing resin substrate 11, a substrate 30 disposed to face a surface 11a of the sulfur atom-containing resin substrate 11, a fixing member 31 that fixes a peripheral end part of the sulfur atom-containing resin substrate 11 and a peripheral end part of the substrate 30, and an injection part provided in the fixing member 31.

The second polymerizable composition is injected into the gap 20 from the injection part and polymerized and cured, whereby the photochromic layer 21 can be laminated on the surface 11a of the sulfur atom-containing resin substrate 11.

In addition, the sulfur atom-containing resin substrate 11 and the substrate 30 can have a curved surface and can be substantially circular in a plan view. In addition, since the gap 20 is formed by being sandwiched between the sulfur atom-containing resin substrate 11 and the substrate 30, the shape, the thickness, and the like of the gap 20 are adjusted according to the shapes of the sulfur atom-containing resin substrate 11 and the substrate 30. The photochromic layer 21 is

also designed according to the shape, the thickness, and the like of the gap 20.

The material constituting the substrate 30 is not particularly limited, and can be formed of glass, metal, a resin, or the like. The substrate 30 is peeled off later, whereby a laminate of the photochromic layer 21 to be formed later in the gap 20 and the substrate 30 can be obtained. In addition, the substrate 30 can be used as it is to form a laminate of the sulfur atom-containing resin substrate 11, a thin film-shaped molded body, and the substrate 30.

Polymerization conditions for the second polymerizable composition for forming the photochromic layer 21 are not limited because the conditions vary depending on the composition and the amount of the first polymerizable composition used, the type and the amount of the catalyst used, the shape of the mold, and the like, but the polymerization is generally performed at a temperature of about -50°C to 150°C for 1 to 50 hours.

In this manner, the optical member 100 according to the present embodiment can be manufactured.

<Applications and optical lens>

Examples of the applications of the optical member 100 according to the present embodiment include a plastic lens, a camera lens, a lens for a light-emitting diode, a lens case for a light-emitting diode, a prism, an optical fiber, an information recording substrate, and a filter. In particular, the optical member 100 is suitable as an optical material or an optical element such as a plastic lens, a camera lens, a lens for a light-emitting diode, or a lens case for a light-emitting diode.

Among these, it is suitable to use the optical member 100 as an optical lens having a photochromic function.

The optical lens including the optical member 100 according to the present embodiment may be used as a laminated plastic lens by applying a coating layer to one surface or both surfaces of the lens substrate consisting of the optical member 100, as necessary. Examples of the coating layer include a primer layer, a hard coat layer, an anti-reflective coating layer, an antifogging coating layer, an antifouling layer, and a water-repellent layer. Each of the coating layers can be used alone, or a plurality of the coating layers can be used as a multilayer. In a case where coating layers are provided on both surfaces, the same coating layer may be provided on each surface, or different coating layers may be provided.

For the purpose of protecting the eyes from infrared rays, an infrared absorber may be used in combination with each of these coating layers, and for the purpose of improving the weather resistance of the lens, a light stabilizer, an antioxidant, an antistatic agent, or other known additives for enhancing the performance of the lens may be used in combination. A hard coat layer, a coat layer such as an anti-reflective coat, or a primer layer may be provided.

The embodiments according to the present invention have been described above. However, these are examples of the present invention, and various configurations other than the above can be adopted.

Examples

Next, the present invention will be described in detail with reference to examples, but the content of the present invention is not limited to the examples.

The expression "to be a main component" means that the content of the component X (in a case where the component X consists of two or more kinds of compounds, the total content of the two or more kinds of compounds) is 50% or more with respect to the total amount of the composition. In addition, "%" in the description of the expression "to be a main component" means a ratio (% by area) of the total area of all peaks of the component X to the total area of all peaks of the composition, which is determined by high-performance liquid chromatography.

· Experiment A: case where an episulfide-based resin substrate was used

(1) Production of episulfide-based resin substrate

<Raw material of episulfide-based resin substrate>

(Bifunctional or higher functional thiol compound (e))

· Thiol composition containing a mixture of 4,8-dimercaptomethyl-1,11-dimercapto-3,6,9-trithiaundecane, 4,7-dimercaptomethyl-1,11-dimercapto-3,6,9-trithiaundecane, and 5,7-dimercaptomethyl-1,11-dimercapto-3,6,9-trithiaundecane as a main component

(Episulfide compound (f))

· Episulfide compound containing bis(2,3-epithiopropyl)disulfide as a main component

(Ultraviolet absorber)

· 2-(5'-t-butyl-2-hydroxyphenyl)-benzotriazole ("Tinuvin PS" manufactured by BASF Japan Ltd.)

An episulfide-based resin substrate was produced by the following method.

(Example 1A)

1.1 parts by mass of an ultraviolet absorber was added to 100 parts by mass of an episulfide compound (f) containing bis(2,3-epithiopropyl)disulfide as a main component, and the mixture was stirred for 30 minutes to be dissolved. 9.0 parts by mass of a thiol composition (e) was added to this solution. 0.1 parts by mass of N,N-dicyclohexylmethylamine was added thereto, and the mixture was stirred for 10 minutes to be dissolved. Further, 0.02 parts by mass of N,N-dimethylcyclohexylamine was added to 1 part by mass of a thiol composition (e) prepared in advance, and the solution was added to this solution and stirred for 10 minutes to obtain a polymerizable composition.

Thereafter, the polymerizable composition was stirred and degassed in a reduced-pressure environment of 400 Pa or less at 10°C to 20°C for 30 minutes, and then filtered using a PTFE filter of 1.0 μm, and the obtained polymerizable composition was cast into a space portion surrounded by glass molds, and then the temperature was raised from 30°C to 120°C over 23 hours.

Thereafter, the temperature was lowered to room temperature, and the glass mold was removed to obtain an episulfide-based resin substrate.

The obtained substrate was used in the photochromic layer formation step, which is a subsequent step, without performing an annealing treatment.

[Comparative Example 1A]

An episulfide-based resin substrate was obtained in the same manner as in Example 1A, except that the annealing treatment was further performed on the episulfide-based resin substrate removed from the glass mold under the conditions of 120°C/10 minutes, and the obtained substrate was used in the photochromic layer formation step, which is a subsequent step.

[Comparative Example 2A]

A sulfur atom-containing resin substrate was obtained in the same manner as in Example 1A, except that the annealing treatment was further performed on the episulfide-based resin substrate removed from the glass mold under the conditions of 120°C/1 hour, and the obtained substrate was used in the photochromic layer formation step, which is a subsequent step.

(2) Production of first polymerizable composition for photochromic layer

<Raw material of photochromic layer>

Iso(thio)cyanate compound (a)

· (a2): isocyanate composition containing a mixture of 2,5-bis(isocyanatomethyl)bicyclo-[2.2.1]-heptane and 2,6-bis(isocyanatomethyl)bicyclo-[2.2.1]-heptane as a main component

(Hydroxyl group-containing polyether compound (b))

· Polyethylene glycol polypropylene glycol polyethylene glycol (Pluronic L64, manufactured by BASF SE)

Active hydrogen compound (c)

· (c2): thiol composition containing 4-mercaptomethyl-1,8-dimercapto-3,6-dithiaoctane as a main component

A master solution was prepared in advance by dissolving 0.305 parts by mass of Reversacol Wembley Grey and 0.30 parts by mass of Reversacol Heath Green in 19.395 parts by mass of an isocyanate composition containing a mixture of 2,5-bis(isocyanatomethyl)bicyclo-[2.2.1]-heptane and 2,6-bis(isocyanatomethyl)bicyclo-[2.2.1]-heptane as a main component.

20 parts by mass of the obtained master solution was added to 22.16 parts by mass of an isocyanate composition containing a mixture of 2,5-bis(isocyanatomethyl)bicyclo-[2.2.1]-heptane and 2,6-bis(isocyanatomethyl)bicyclo-[2.2.1]-heptane as a main component, and the mixture was stirred. 15 parts by mass of polyethylene glycol polypropylene glycol polyethylene glycol (Pluronic L64, manufactured by BASF SE) and 0.3 parts by mass of acidic phosphate ester (JP-506H, manufactured by Johoku Chemical Co., Ltd.) were added to the mixture, and the mixture was stirred at 15°C to 20°C for 30 minutes.

A solution was prepared in advance by adding 0.1 parts by mass of dimethyltin dichloride to 37.3 parts by mass of a thiol composition containing 4-mercaptomethyl-1,8-dimercapto-3,6-dithiaoctane as a main component, and uniformly dissolving the mixture. The solution was stirred at 15°C to 20°C for 15 minutes to obtain a first polymerizable composition.

Thereafter, the first polymerizable composition was stirred and degassed in a reduced-pressure environment of 400 Pa or less at 15°C to 20°C for 1 hour and 30 minutes, and then filtered using a PTFE filter having a pore size of 1.0 μm.

(3) Production of photochromic lens

Using an injection molding apparatus as shown in FIG. 2, the episulfide-based resin substrate prepared in (1) above was set in a mold, and the first polymerizable composition obtained in (2) above was cast into a space portion surrounded by a glass mold and a sulfur atom-containing resin substrate, and then the temperature was raised from 10°C to 130°C over 24 hours. Thereafter, the temperature was lowered to room temperature, and the glass mold was removed to obtain a photochromic lens in which the photochromic functional layer and the episulfide-based resin substrate were laminated.

(4) Measurement of content ratio of thiol group

Using the episulfide-based resin substrate produced in (1) above, Fourier transform infrared spectrophotometer (FTIR) analysis was performed by an attenuated total reflectance method (ATR method) under the following conditions. As the episulfide-based resin substrate, a resin substrate which was polymerized and cured, removed from the glass mold, and then allowed to stand at 23°C and 50% RH for 1 hour was used.

From the obtained curve, an absorbance (T1) of a maximum absorption peak observed at 2900 to 2970 $cm^{-1}$ and an absorbance (T0) of a maximum absorption peak observed at 2550 to 2700 $cm^{-1}$ were each determined, and a ratio (%) of T0 to T1 was calculated. T0 was 2600 $cm^{-1}$ in all cases.

<Conditions>

Fourier transform infrared spectrophotometer (FTIR): FT/IR 6100 type, manufactured by JASCO Corporation
Method: ATR method (attenuated total reflectance method)
Number of times of integration: 100 times
Wavelength range: 4000 to 400 $cm^{-1}$, resolution: 4 $cm^{-1}$
Prism material: diamond (φ1.8 mm)

(5) Three-point bending test

A test piece having a size of 65 mm × 25 mm was cut out such that the geometric center of the obtained photochromic lens was positioned at the center portion, and using the test piece, a three-point bending test was performed at 25°C in accordance with JIS K7171, and a fracture point test force (N) and a maximum point displacement (mm) were measured, and a maximum point stress ($N/mm^2$) was calculated by the following expression. The results are shown in Table 1.

Maximum point stress ($N/mm^2$) = Fracture point test force (N) ÷ (thickness (mm) of test piece × width (mm) of test piece)

<Test conditions>

Testing apparatus: Desktop precision universal testing machine AUTOGRAPH AGS-X series (manufactured by Shimadzu Corporation)
Span between fulcrums: 34 mm
Crosshead speed: 10 mm/min
Radius R2 of support: 2 mm

(6) Appearance of test piece after measurement

The appearance of the fracture surface of each test piece after the three-point bending test of (5) was visually observed and evaluated according to the following standard.

· Criteria

OK: No delamination was confirmed at the interfacial surface
NG: Delamination was confirmed at the interfacial surface

(7) Evaluation of adhesiveness

The blade of a steel wedge (model number: W-S-1.5, blade length: 70.5 mm, total length: 230 mm) was applied to the layer between the obtained episulfide-based resin substrate of the photochromic lens and the photochromic functional layer, and the steel wedge was driven with a metal hammer by hand until the photochromic lens was broken.

OK: At the location where the wedge was driven, the wedge was difficult to enter, and the exposure of the interfacial surface was small.
NG: At the location where the wedge was driven, the wedge entered deeply, and the exposure of the interfacial surface was large.

(8) Evaluation of photochromic function

It was confirmed that, in a case where the photochromic lens of Example 1A was disposed under sunlight, good color development performance was obtained promptly, and in a case where the photochromic lens was returned indoors, the photochromic lens was promptly returned to the transparent state, as compared with the photochromic lenses of Comparative Examples 1A and 2A.

[Table 1]

Table 1

| | | | Unit | Example 1A | Comparative Example 1A | Comparative Example 2A |
|---|---|---|---|---|---|---|
| Optical member | Episulfide-based resin substrate | Episulfide compound (f) | % by mass | 90.9 | | |
| | | Thiol compound (e) | % by mass | 9.1 | | |
| | | Absorbance T1 (2,900 to 2,970 $cm^{-1}$) | - | 0.057 | 0.057 | 0.042 |
| | | Absorbance T0 (2,600 $cm^{-1}$) | - | 0.004 | 0.002 | 0.001 |
| | | T0/T1 $\times$ 100 | % | 7.018 | 2.632 | 2.381 |
| | | Thickness of geometric center | mm | 2.2 | | |
| | | Radius of curvature | mm | 135 | | |
| | Photochromic layer | Iso(thio)cyanate compound (a) | % by mass | 47.7 | | |
| | | Hydroxyl group-containing polyether compound (b) | % by mass | 15 | | |
| | | Active hydrogen compound (c) | % by mass | 37.3 | | |
| | | Photochromic compound (d) | % by mass | 0.605 | | |
| | | Thickness of geometric center | mm | 0.8 | | |
| | | Radius of curvature | mm | 135 | | |
| | Characteristics | Thickness of poly(thio) urethan e resin substrate/thickne ss of photochromic layer | - | 2.8 | | |
| | | Thickness of test piece | mm | 3 | | |
| | | Fracture point test force | N | 7.8 | 7.4 | 7.3 |
| | | Maximum point displacement | mm | 5.7 | 5.5 | 4.8 |
| | | Maximum point stress | $N/mm^2$ | 142.2 | 137.5 | 127.1 |
| Evaluation | Appearance of test piece after measurement | | - | OK | NG | NG |
| | Evaluation of adhesiveness | | - | OK | NG | NG |

· Experiment B: Case where poly(thio)urethane resin substrate was used

(1) Production of poly(thio)urethane resin substrate

<Raw material of poly(thio)urethane resin substrate>

Iso(thio)cyanate compound (a)

· (a1): m-xylylene diisocyanate

· (a2): isocyanate composition containing a mixture of 2,5-bis(isocyanatomethyl)bicyclo-[2.2.1]-heptane and 2,6-bis(isocyanatomethyl)bicyclo-[2.2.1]-heptane as a main component

(Bifunctional or higher functional thiol compound (e))

· (e1): Thiol composition containing pentaerythritol tetrakis(3-mercaptopropionate) as a main component

· (e2): Thiol composition containing 4-mercaptomethyl-1,8-dimercapto-3,6-dithiaoctane as a main component

· (e3): Thiol composition containing a mixture of 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane as a main component

A poly(thio)urethane resin substrate was produced by the following procedure x.

<Examples 1B, 3B, and 4B>

0.05 parts by weight of 2-(2'-hydroxy-5-t-octylphenyl)-benzotriazole (manufactured by Kyodo Chemical Co., Ltd.; Viosorb 583) as an ultraviolet absorber and 0.125 parts by weight of MR internal release agent Zelec-UN (manufactured by Mitsui Chemicals, Inc.) were added to 50.6 parts by weight of an isocyanate composition containing 2,5-bis(isocyanatomethyl)bicyclo-[2.2.1]-heptane and 2,6-bis(isocyanatomethyl)bicyclo-[2.2.1]-heptane as a main component, and the mixture was stirred for 5 minutes to be dissolved. 23.9 parts by weight of a thiol composition containing pentaerythritol tetrakis(3-mercaptopropionate) as a main component was added to this solution. Further, a solution obtained by adding 0.02 parts by weight of dimethyltin chloride to 25.5 parts by weight of a thiol composition containing 4-mercaptomethyl-1,8-dimercapto-3,6-dithiaoctane as a main component and dissolving the mixture was prepared in advance, and this solution was added thereto and stirred for 15 minutes to obtain a polymerizable composition.

Thereafter, the polymerizable composition was stirred and degassed in a reduced-pressure environment of 400 Pa or less at 10°C to 20°C for 30 minutes, and then filtered using a PTFE filter having a pore size of 1.0 μm. The obtained polymerizable composition was cast into a space portion surrounded by glass molds, and then the temperature was raised from 10°C to 130°C over 32 hours.

Thereafter, the temperature was lowered to room temperature, and the poly(thio)urethane resin substrate was removed from the glass mold.

The obtained substrate was used in the photochromic layer formation step, which is a subsequent step, without performing an annealing treatment.

(Example 2B)

1.5 parts by weight of 2-(2'-hydroxy-5-t-octylphenyl)-benzotriazole (manufactured by Kyodo Chemical Co., Ltd.; Viosorb 583) as an ultraviolet absorber and 0.1 parts by weight of MR internal release agent Zelec-UN (manufactured by Mitsui Chemicals, Inc.) were added to 40.7 parts by weight of m-xylylene diisocyanate, and the mixture was stirred at 10°C to 15°C for 10 minutes to be dissolved. 49.3 parts by weight of a thiol composition containing a mixture of 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane as a main component was added to this solution, and a solution obtained by adding 0.005 parts by weight of dimethyltin chloride to 10 parts by weight of m-xylylene diisocyanate and dissolving the mixture was prepared in advance, and this solution was added thereto and stirred at 10°C to 15°C for 15 minutes to obtain a polymerizable composition.

Thereafter, the polymerizable composition was stirred and degassed in a reduced-pressure environment of 400 Pa or less at 10°C to 20°C for 30 minutes, and then filtered using a PTFE filter having a pore size of 1.0 μm. The obtained polymerizable composition was cast into a space portion surrounded by glass molds, and then the temperature was raised from 10°C to 130°C over 32 hours.

Thereafter, the temperature was lowered to room temperature, and the poly(thio)urethane resin substrate was removed from the glass mold.

The obtained substrate was used in the photochromic layer formation step, which is a subsequent step, without performing an annealing treatment.

<Comparative examples 1B and 3B>

0.05 parts by weight of 2-(2'-hydroxy-5-t-octylphenyl)-benzotriazole (manufactured by Kyodo Chemical Co., Ltd.; Viosorb 583) as an ultraviolet absorber and 0.125 parts by weight of MR internal release agent Zelec-UN

(manufactured by Mitsui Chemicals, Inc.) were added to 50.6 parts by weight of an isocyanate composition containing 2,5-bis(isocyanatomethyl)bicyclo-[2.2.1]-heptane and 2,6-bis(isocyanatomethyl)bicyclo-[2.2.1]-heptane as a main component, and the mixture was stirred for 5 minutes to be dissolved. 23.9 parts by weight of a thiol composition containing pentaerythritol tetrakis(3-mercaptopropionate) was added to this solution. Further, a solution obtained by adding 0.02 parts by weight of dimethyltin chloride to 25.5 parts by weight of a thiol composition containing 4-mercaptomethyl-1,8-dimercapto-3,6-dithiaoctane as a main component and dissolving the mixture was prepared in advance, and this solution was added thereto and stirred for 15 minutes to obtain a polymerizable composition.

Thereafter, the polymerizable composition was stirred and degassed in a reduced-pressure environment of 400 Pa or less at 10°C to 20°C for 30 minutes, and then filtered using a PTFE filter having a pore size of 1.0 μm. The obtained polymerizable composition was cast into a space portion surrounded by glass molds, and then the temperature was raised from 10°C to 130°C over 32 hours.

Thereafter, the temperature was lowered to room temperature, and the poly(thio)urethane resin substrate was removed from the glass mold.

The obtained substrate was annealed under the conditions of 120°C for 2 hours and used in the photochromic layer formation step, which is a subsequent step.

(Comparative example 2B)

1.5 parts by weight of 2-(2'-hydroxy-5-t-octylphenyl)-benzotriazole (manufactured by Kyodo Chemical Co., Ltd.; Viosorb 583) as an ultraviolet absorber and 0.1 parts by weight of MR internal release agent Zelec-UN (manufactured by Mitsui Chemicals, Inc.) were added to 40.7 parts by weight of m-xylylene diisocyanate, and the mixture was stirred at 10°C to 15°C for 10 minutes to be dissolved. 49.3 parts by weight of a thiol composition containing a mixture of 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane as a main component was added to this solution, and a solution obtained by adding 0.005 parts by weight of dimethyltin chloride to 10 parts by weight of m-xylylene diisocyanate and dissolving the mixture was prepared in advance, and this solution was added thereto and stirred at 10°C to 15°C for 15 minutes to obtain a polymerizable composition.

Thereafter, the polymerizable composition was stirred and degassed in a reduced-pressure environment of 400 Pa or less at 10°C to 20°C for 30 minutes, and then filtered using a PTFE filter having a pore size of 1.0 μm. The obtained polymerizable composition was cast into a space portion surrounded by glass molds, and then the temperature was raised from 10°C to 130°C over 32 hours.

Thereafter, the temperature was lowered to room temperature, and the poly(thio)urethane resin substrate was removed from the glass mold.

The obtained poly(thio)urethane resin substrate was annealed under the conditions of 120°C for 2 hours and used in the photochromic layer formation step, which is a subsequent step.

(2) Production of first polymerizable composition for photochromic layer

<Raw material of photochromic layer>

Iso(thio)cyanate compound (a)

- (a2): isocyanate composition containing a mixture of 2,5-bis(isocyanatomethyl)bicyclo-[2.2.1]-heptane and 2,6-bis(isocyanatomethyl)bicyclo-[2.2.1]-heptane as a main component

(Hydroxyl group-containing polyether compound (b))

- Polyethylene glycol polypropylene glycol polyethylene glycol (Pluronic L64, manufactured by BASF SE)

Active hydrogen compound (c)

- (c2): thiol composition containing 4-mercaptomethyl-1,8-dimercapto-3,6-dithiaoctane as a main component

A master solution was prepared in advance by dissolving 0.305 parts by weight of Reversacol Wembley Grey and 0.30 parts by weight of Reversacol Heath Green in 19.395 parts by weight of an isocyanate composition containing a mixture of 2,5-bis(isocyanatomethyl)bicyclo-[2.2.1]-heptane and 2,6-bis(isocyanatomethyl)bicyclo-[2.2.1]-heptane as a

main component.

20 parts by weight of the obtained master solution was added to 22.16 parts by weight of an isocyanate composition containing a mixture of 2,5-bis(isocyanatomethyl)bicyclo-[2.2.1]-heptane and 2,6-bis(isocyanatomethyl) bicyclo-[2.2.1]-heptane as a main component, and the mixture was stirred. 15 parts by weight of polyethylene glycol polypropylene glycol polyethylene glycol (Pluronic L64, manufactured by BASF SE) and 0.3 parts by weight of acidic phosphate ester (JP-506H, manufactured by Johoku Chemical Co., Ltd.) were added to the mixture, and the mixture was stirred at 15°C to 20°C for 30 minutes.

A solution was prepared in advance by adding 0.1 parts by weight of dimethyltin dichloride to 37.3 parts by weight of a thiol composition containing 4-mercaptomethyl-1,8-dimercapto-3,6-dithiaoctane as a main component, and uniformly dissolving the mixture. The solution was stirred at 15°C to 20°C for 15 minutes to obtain a first polymerizable composition.

Thereafter, the first polymerizable composition was stirred and degassed in a reduced-pressure environment of 400 Pa or less at 15°C to 20°C for 1 hour and 30 minutes, and then filtered using a PTFE filter having a pore size of 1.0 μm.

(3) Production of photochromic lens

Using an injection molding apparatus as shown in FIG. 2, the poly(thio)urethane resin substrate prepared in (1) above was set in a mold, and the first polymerizable composition obtained in (2) above was cast into a space portion surrounded by a glass mold and the poly(thio)urethane resin substrate, and then the temperature was raised from 10°C to 130°C over 24 hours. Thereafter, the temperature was lowered to room temperature, and the glass mold was removed to obtain a photochromic lens in which the photochromic functional layer and the poly(thio)urethane resin substrate were laminated.

(4) Measurement of content ratio of isocyanate group

Using the poly(thio)urethane resin substrate produced in (1) above, Fourier transform infrared spectrophotometer (FTIR) analysis was performed by an attenuated total reflectance method (ATR method) under the following conditions. The poly(thio)urethane resin substrate was used after being left to stand in advance at 23°C and 50% RH for 1 hour.

From the obtained curve, an absorbance (A1) of a maximum absorption peak observed at 2,900 to 2,970 $cm^{-1}$ and an absorbance (A0) of a maximum absorption peak observed at 2,250 to 2,260 $cm^{-1}$ were obtained, and a ratio (%) of A0 to A1 was calculated.

<Conditions>

Fourier transform infrared spectrophotometer (FTIR): FT/IR 6100 type, manufactured by JASCO Corporation
Method: ATR method (attenuated total reflectance method)
Number of times of integration: 100 times
Wavelength range: 4000 to 400 $cm^{-1}$, resolution: 4 $cm^{-1}$
Prism material: diamond (φ1.8 mm)

(5) Three-point bending test

A test piece having a size of 65 mm × 25 mm was cut out such that the geometric center of the obtained photochromic lens was positioned at the center portion, and using the test piece, a three-point bending test was performed at 25°C in accordance with JIS K7171, and a fracture point test force (N) and a maximum point displacement (mm) were measured, and a maximum point stress ($N/mm^2$) was calculated by the following expression. The results are shown in Table 2.

Maximum point stress ($N/mm^2$) = Fracture point test force (N) ÷ (thickness (mm) of test piece × width (mm) of test piece)

<Test conditions>

Testing apparatus: Desktop precision universal testing machine AUTOGRAPH AGS-X series (manufactured by

Shimadzu Corporation)
Span between fulcrums: 34 mm
Crosshead speed: 10 mm/min
Radius R2 of support: 2 mm

(6) Appearance of test piece after measurement

The appearance of the fracture surface of each test piece after the three-point bending test of (5) was visually observed and evaluated according to the following standard.

· Criteria

OK: No delamination was confirmed at the interfacial surface
NG: Delamination was confirmed at the interfacial surface

(7) Evaluation of adhesiveness

The blade of a steel wedge (model number: W-S-1.5, blade length: 70.5 mm, total length: 230 mm) was applied to the layer between the obtained poly(thio)urethane resin substrate of the photochromic lens and the photochromic functional layer, and the steel wedge was driven by hand using a metal hammer until the photochromic lens was broken.

OK: At the location where the wedge was driven, the wedge was difficult to enter, and the exposure of the interfacial surface was small.
NG: At the location where the wedge was driven, the wedge entered deeply, and the exposure of the interfacial surface was large.

(8) Evaluation of photochromic function

It was confirmed that, in a case where the photochromic lenses of Examples 1B to 4B were disposed under sunlight, good color development performance was obtained promptly, and in a case where the photochromic lenses were returned to the room, the photochromic lenses returned to the transparent state promptly, as compared with the photochromic lenses of Comparative examples 1B and 2B.

[Table 2]

Table 2

| | | | Unit | Example 1B | Example 2B | Example 3B | Example 4B | Comparative Example 1B | Comparative Example 2B |
|---|---|---|---|---|---|---|---|---|---|
| Optical member | Episulfide-based resin substrate | Iso (thio) cyanate compound (a) | % by mass | a2: 50.6 | a1: 50.7 | a2: 50.6 | a2: 50.6 | a2: 50.6 | a1: 50.7 |
| | | Bifunctional on higher functional thiol compound (e) | % by mass | e1: 23.9 e2: 25.5 | e3: 49.3 | e1: 23.9 e2: 25.5 | e1: 23.9 e2: 25.5 | e1: 23.9 e2: 25.5 | e3: 49.3 |
| | | Absorbance T1 (2,900 to 2,970 $cm^{-1}$) | - | 0.113 | 0.032 | 0.113 | 0.113 | 0.109 | 0.034 |
| | | Absorbance TC (2,600 $cm^{-1}$) | - | 0.049 | 0.028 | 0.049 | 0.049 | 0.014 | 0.008 |
| | | A0 ÷ A1 × 100 | % | 43.3 | 86.3 | 43.3 | 43.3 | 13.0 | 24.8 |
| | | Equivalent ratio of thiol group to isocyanate group | SH:NCO | 50.8:49.2 | 50:50 | 50.8:49.2 | 50.8:49.2 | 50.8:49.2 | 50:50 |
| | | Thickness of geometric center | mm | 2.2 | 2.2 | 2.2 | 3.2 | 2.2 | 2.2 |
| | | Radius of curvature | mm | 135 | 135 | | 135 | 135 | 135 |
| | Photochromic layer | Iso (thio) cyanate compound (a) | % by mass | 47.7 | 47.7 | 47.7 | 47.7 | 47.7 | 47.7 |
| | | Hydroxyl group-containing polyether compound (b) | % by mass | 15 | 15 | 15 | 15 | 15 | 15 |
| | | Active hydroger compound (c) | % by mass | 37.3 | 37.3 | 37.3 | 37.3 | 37.3 | 37.3 |
| | | Photochromic compound (d) | % by mass | 0.605 | 0.605 | 0.605 | 0.605 | 0.605 | 0.605 |
| | | Thickness of geometric center | mm | 0.8 | 0.8 | 0.8 | 0.8 | 0.8 | 0.8 |
| | | Radius of curvature | mm | 135 | 135 | 135 | 135 | 135 | 135 |
| | Characteristics | Thickness of poly(thio) urethane resin substrate/thickness of photochromic layer | - | 2.8 | 2.8 | 2.8 | 4.0 | 2.8 | 2.8 |
| | | Thickness of test piece | mm | 3 | 3 | 3 | 4 | 3 | 3 |
| | | Fracture point test force | N | 14 | 21 | 23 | 14 | 29 | 25 |
| | | Maximum point displacement | mm | 7.3 | 6.8 | 6.0 | 6.8 | 7.0 | 6.5 |

(continued)

| | | | Unit | Example 1B | Example 2B | Example 3B | Example 4B | Comparative Example 1B | Comparative Example 2B |
|---|---|---|---|---|---|---|---|---|---|
| | | Maximum point stress | N/mm$^2$ | 169.5 | 169.3 | 175.1 | 172.3 | 178.3 | 179.1 |
| Evaluation | Appearance of test piece after measurement | | - | OK | OK | OK | OK | NG | NG |
| | Evaluation of adhesiveness | | - | OK | OK | OK | OK | NG | NG |

This application claims priority based on Japanese Patent Application No. 2023-196633 filed on November 20, 2023 and Japanese Patent Application No. 2024-161960 filed on September 19, 2024, the entire contents of which are incorporated herein by reference.

REFERENCE SIGNS LIST

| | |
|---|---|
| 11: | sulfur atom-containing resin substrate |
| 11a: | surface |
| 11b: | surface |
| 20: | gap |
| 21: | photochromic layer |
| 30: | substrate |
| 31: | fixing member |
| 100: | optical member |

## Claims

**1.** An optical member comprising:

a sulfur atom-containing resin substrate; and
a photochromic layer laminated on a surface of the sulfur atom-containing resin substrate,
wherein a maximum point stress measured by the following procedure x is 138 $N/mm^2$ or more and 177 $N/mm^2$ or less,
procedure x: using the optical member, a three-point bending test is performed at 25°C in accordance with JIS K7171, and a maximum point stress ($N/mm^2$) in a case where the test is performed under conditions of a span between fulcrums of 34 mm, a speed of 10 mm/min, and a radius R2 of a support of 2 mm is measured.

**2.** The optical member according to Claim 1, wherein the photochromic layer is a cured product of a first polymerizable composition containing a bifunctional or higher functional iso(thio)cyanate compound (a), a hydroxyl group-containing polyether compound (b), a bifunctional or higher functional active hydrogen compound (c), and a photochromic compound (d).

**3.** The optical member according to Claim 1 or 2, wherein the sulfur atom-containing resin substrate is a poly(thio)urethane resin substrate or an episulfide-based resin substrate.

**4.** The optical member according to Claim 3,

wherein, in a case where a surface of the episulfide-based resin substrate is subjected to Fourier transform infrared spectrophotometer (FTIR) analysis by an attenuated total reflectance method (ATR method), an absorbance of a maximum absorption peak observed at 2900 to 2970 $cm^{-1}$ is denoted by T1, and an absorbance of a maximum absorption peak observed at 2550 to 2700 $cm^{-1}$ is denoted by T0, a ratio (%) of T0 to T1 is in a range of 4% to 10%, and
the photochromic layer is a cured product of a first polymerizable composition containing a bifunctional or higher functional iso(thio)cyanate compound (a), a hydroxyl group-containing polyether compound (b), a bifunctional or higher functional active hydrogen compound (c), and a photochromic compound (d).

**5.** The optical member according to Claim 3 or 4, wherein the episulfide-based resin substrate is a cured product of a second polymerizable composition containing a bifunctional or higher functional thiol compound (e) and a bifunctional or higher functional episulfide compound (f).

**6.** The optical member according to any one of Claims 3 to 5, wherein an equivalent ratio of a thiol group to an episulfide group in the episulfide-based resin substrate is 1:99 to

30:70.

**7.** The optical member according to Claim 3, wherein an episulfide compound (f) contained in the episulfide-based resin substrate is any one of bis(2,3-epithiopropyl)sulfide or bis(2,3-epithiopropyl)disulfide.

**8.** The optical member according to Claim 3 or 7,

wherein, in a case where a surface of the poly(thio)urethane resin substrate is subjected to Fourier transform infrared spectrophotometer (FTIR) analysis by an attenuated total reflectance method (ATR method), an absorbance of a maximum absorption peak observed at 2900 to 2970 $cm^{-1}$ is denoted by A1, and an absorbance of a maximum absorption peak observed at 2250 to 2260 $cm^{-1}$ is denoted by A0, a ratio (%) of A0 to A1 is in a range of 30% to 99%, and
the photochromic layer is a cured product of a first polymerizable composition containing a bifunctional or higher functional iso(thio)cyanate compound (a), a hydroxyl group-containing polyether compound (b), a bifunctional or higher functional active hydrogen compound (c), and a photochromic compound (d).

**9.** The optical member according to any one of Claims 3, 7, or 8, wherein the poly(thio)urethane resin substrate is a cured product of a second polymerizable composition containing a bifunctional or higher functional iso(thio)cyanate compound (a) and a bifunctional or higher functional thiol compound (e).

**10.** The optical member according to any one of Claims 3, 7 to 9, wherein an equivalent ratio (SH:NCO) of a thiol group to an isocyanate group in the poly(thio)urethane resin substrate is 40:60 to 60:40.

**11.** The optical member according to any one of Claims 1 to 10, wherein a ratio (thickness of sulfur atom-containing resin substrate/thickness of photochromic layer) of a thickness (mm) of the sulfur atom-containing resin substrate to a thickness (mm) of the photochromic layer is 0.5 to 20.

**12.** The optical member according to any one of Claims 1 to 11, wherein a thickness (mm) of the sulfur atom-containing resin substrate is 0.5 to 20 mm.

**13.** The optical member according to any one of Claims 1 to 12, wherein a thickness (mm) of the photochromic layer is 0.1 to 5 mm.

**14.** The optical member according to any one of Claims 1 to 13, wherein the bifunctional or higher functional iso(thio)cyanate compound (a) contained in the photochromic layer includes one or two or more selected from xylylene diisocyanate, 2,5-bis(isocyanatomethyl)bicyclo-[2.2.1]-heptane, 2,6-bis(isocyanatomethyl)bicyclo-[2.2.1]-heptane, tolylene diisocyanate, 4,4'-diphenylmethane diisocyanate, isophorone diisocyanate, hexamethylene diisocyanate, 1,3-bis(isocyanatomethyl)cyclohexane, bis(isocyanatocyclohexyl)methane, and phenylene diisocyanate.

**15.** The optical member according to any one of Claims 1 to 14, wherein the bifunctional or higher functional active hydrogen compound (c) contained in the photochromic layer has one or two or more functional groups selected from a hydroxy group, a mercapto group, an amino group, and a carboxyl group.

**16.** The optical member according to any one of Claims 1 to 15, wherein at least one surface has a curved surface, and a radius of curvature is more than 0 and 400 mm or less.

**17.** An optical lens comprising: the optical member according to any one of Claims 1 to 16.

**18.** A method for producing an optical member, comprising:

a laminating step of laminating a photochromic layer on a surface of a sulfur atom-containing resin substrate, wherein the optical member is configured such that a maximum point stress measured by a procedure x is 138 $N/mm^2$ or more and 177 $N/mm^2$ or less,

procedure x: using the optical member, a three-point bending test is performed at 25°C in accordance with JIS K7171, and a maximum point stress (N/mm$^2$) in a case where the test is performed under conditions of a span between fulcrums of 34 mm, a speed of 10 mm/min, and a radius R2 of a support of 2 mm is measured.

**19.** The method for producing an optical member according to Claim 18, wherein the photochromic layer is a cured product of a first polymerizable composition containing a bifunctional or higher functional iso(thio)cyanate compound (a), a hydroxyl group-containing polyether compound (b), a bifunctional or higher functional active hydrogen compound (c), and a photochromic compound (d).

**20.** The method for producing an optical member according to Claim 18 or 19, wherein the sulfur atom-containing resin substrate is a poly(thio)urethane resin substrate or an episulfide-based resin substrate.

**21.** The method for producing an optical member according to Claim 20, wherein in the laminating step, a surface of the episulfide-based resin substrate on which the photochromic layer is laminated is subjected to Fourier transform infrared spectrophotometer (FTIR) analysis by an attenuated total reflectance method (ATR method), and in a case where an absorbance of an absorption peak observed at 2900 to 2970 cm$^{-1}$ is defined as T1 and an absorbance of an absorption peak observed at 2550 to 2700 cm$^{-1}$ is defined as T0, a ratio (%) of T0 to T1 is in a range of 4% to 10%.

**22.** The method for producing an optical member according to Claim 20 or 21, wherein in the laminating step, the episulfide-based resin substrate is a substrate obtained by curing a second polymerizable composition containing a bifunctional or higher functional thiol compound (e) and a bifunctional or higher functional episulfide compound (f) and not subjected to an annealing treatment.

**23.** The method for producing an optical member according to Claim 20, wherein in the laminating step, a surface of the poly(thio)urethane resin substrate on which the photochromic layer is laminated is subjected to Fourier transform infrared spectrophotometer (FTIR) analysis by an attenuated total reflectance method (ATR method), and in a case where an absorbance of an absorption peak observed at 2900 to 2970 cm$^{-1}$ is defined as A1 and an absorbance of an absorption peak observed at 2250 to 2260 cm$^{-1}$ is defined as A0, a ratio (%) of A0 to A1 is in a range of 30% to 99%.

**24.** The method for producing an optical member according to Claim 20 or 23, wherein in the laminating step, the poly(thio)urethane resin substrate is a substrate obtained by curing a second polymerizable composition containing a bifunctional or higher functional iso(thio)cyanate compound (a) and a bifunctional or higher functional thiol compound (e) and not subjected to an annealing treatment.

**25.** The method for producing an optical member according to any one of Claims 18 to 24, wherein the annealing treatment is a heat treatment at 50°C or higher and 150°C or lower.

**26.** The method for producing an optical member according to any one of Claims 18 to 25, wherein in the laminating step, the photochromic layer is laminated by curing the first polymerizable composition on a surface of the sulfur atom-containing resin substrate.

Fig.1

21a
11b
21
11
11a
100

Fig.2

31
20
11
30
11a
31

**INTERNATIONAL SEARCH REPORT**

International application No. **PCT/JP2024/038927**

**A. CLASSIFICATION OF SUBJECT MATTER**

***G02B 1/04***(2006.01)i; ***B32B 7/023***(2019.01)i; ***B32B 27/40***(2006.01)i; ***C08G 18/38***(2006.01)i
FI: G02B1/04; C08G18/38 076; B32B7/023; B32B27/40

According to International Patent Classification (IPC) or to both national classification and IPC

**B. FIELDS SEARCHED**

Minimum documentation searched (classification system followed by classification symbols)

G02B1/04; B32B7/023; B32B27/40; C08G18/38

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2023/085051 A1 (TOKUYAMA CORPORATION) 19 May 2023 (2023-05-19) paragraphs [0004], [0106], [0115]-[0116], [0132], [0221]-[0227], table 4 | 1-3, 8-26 |
| Y | paragraphs [0004], [0106], [0115]-[0116], [0132], [0221]-[0227], table 4 | 4-7 |
| Y | WO 2018/037621 A1 (ITOH OPTICAL INDUSTRIAL CO., LTD.) 01 March 2018 (2018-03-01) paragraph [0017] | 4-7 |
| Y | JP 2005-305306 A (FUJI KASEI CO., LTD.) 04 November 2005 (2005-11-04) paragraph [0017] | 4-7 |
| A | JP 2020-170095 A (TOKUYAMA CORPORATION) 15 October 2020 (2020-10-15) entire text, all drawings | 1-26 |
| A | JP 2022-166771 A (TOKUYAMA CORPORATION) 02 November 2022 (2022-11-02) entire text, all drawings | 1-26 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **23 December 2024** | **14 January 2025** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

INTERNATIONAL SEARCH REPORT

International application No.
**PCT/JP2024/038927**

**C. DOCUMENTS CONSIDERED TO BE RELEVANT**

| Category* | Citation of document, with indication, where appropriate, of the relevant passages | Relevant to claim No. |
|---|---|---|
| A | WO 2022/191160 A1 (TOKUYAMA CORPORATION) 15 September 2022 (2022-09-15) entire text, all drawings | 1-26 |

Form PCT/ISA/210 (second sheet) (July 2022)

**INTERNATIONAL SEARCH REPORT**
**Information on patent family members**

International application No.
**PCT/JP2024/038927**

| Patent document cited in search report | Publication date (day/month/year) | Patent family member(s) | Publication date (day/month/year) |
|---|---|---|---|
| WO 2023/085051 A1 | 19 May 2023 | (Family: none) | |
| WO 2018/037621 A1 | 01 March 2018 | (Family: none) | |
| JP 2005-305306 A | 04 November 2005 | US 2005/0168690 A1<br>paragraph [0041]<br>EP 1560060 A1<br>KR 10-2005-0078647 A<br>CN 1657975 A<br>TW 200530177 A | |
| JP 2020-170095 A | 15 October 2020 | US 2022/0162486 A1<br>WO 2020/204176 A1<br>EP 3950624 A1<br>CN 113646281 A<br>KR 10-2021-0150386 A<br>TW 202100717 A<br>AU 2020250724 A1<br>CA 3141142 A1<br>MX 2021011973 A | |
| JP 2022-166771 A | 02 November 2022 | (Family: none) | |
| WO 2022/191160 A1 | 15 September 2022 | US 2024/0182749 A1<br>EP 4306318 A1<br>KR 10-2023-0155427 A<br>MX 2023010133 A<br>TW 202246453 A<br>MX 2023010136 A<br>CN 116940871 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2012141306 A
- WO 2011125956 A
- WO 2003011967 A
- WO 2016125736 A
- WO 2009146509 A
- WO 201020770 A
- WO 2012149599 A
- WO 2012162725 A
- JP 2023196633 A
- JP 2024161960 A